(19) Europäisches Patentamt
European Patent Office
Office européen des brevets

(11) EP 4 509 568 A1

(12) **EUROPEAN PATENT APPLICATION**

(43) Date of publication:
**19.02.2025 Bulletin 2025/08**

(21) Application number: **24194740.7**

(22) Date of filing: **15.08.2024**

(51) International Patent Classification (IPC):
***C09D 11/101*** *(2014.01)* ***B41M 3/14*** *(2006.01)*

(52) Cooperative Patent Classification (CPC):
**C09D 11/101; B41M 3/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sicpa Holding SA**
**1008 Prilly (CH)**

(72) Inventors:
- **HOFSTETTER, Pierre-Yves**
**1040 Villars-le-Terroir (CH)**
- **KARASU KILIC, Feyza**
**1004 Lausanne (CH)**
- **VEYA, Patrick**
**1123 Aclens (CH)**

(74) Representative: **GatesIP**
**Dorfplatz 1**
**6060 Sarnen (CH)**

(54) **RADIATION-CURABLE HYBRID PROTECTIVE VARNISHES FOR SECURITY DOCUMENTS**

(57) The invention provides a radiation-curable hybrid protective varnish showing good protective effect and durability characteristics.

EP 4 509 568 A1

## Description

## FIELD OF THE INVENTION

The present invention relates to the technical field of varnishes for protecting security documents, such as banknotes, against premature detrimental influence of contaminants and/or moisture during use.

## BACKGROUND OF THE INVENTION

It is known to provide security documents, in particular banknotes, with dirt-repellent protective coatings to extend their life and fitness for circulation. Protective coatings are protective layers facing the environment, which are obtained from thermally (solvent-containing) curable varnishes, radiation-curable varnishes, or combinations thereof.

WO2022/258704A1 discloses hybrid UV-curable (cationically-curable and radical-curable) protective varnishes that are said to provide good protective qualities to security documents.

WO2014/067715 discloses radiation-curable protective varnishes that comprise certain perfluoropolyether surfactants (classified as per or polyfluoroalkyl substances or "PFAS"). The disclosed protective varnishes are said to show excellent anti-soiling and durability characteristics.

The increasing sensitivity of the public to environmental concerns, as well as the necessary responsiveness of the chemical industry to environmental regulations, have motivated the industry to attempt to develop protective varnishes that contain no or a significantly reduced amount of PFAS.

Thus, there remains a need for a hybrid, radiation-curable protective varnish for providing at high speed (i.e. industrial speed) a protective coating for security documents, which extends their life and fitness for circulation, wherein said hybrid radiation-curable varnish exhibits optimal curing properties, does not contain PFAS, and shows good anti-soiling and durability characteristics.

## SUMMARY OF THE INVENTION

In a first aspect, the invention provides a radiation-curable protective varnish comprising:

a) from about 50 wt% to about 85 wt% of either a cycloaliphatic epoxide, or a mixture of a cycloaliphatic epoxide and one or more cationically curable monomers other than the cycloaliphatic epoxide;
b) from about 3 wt% to about 15 wt%, preferably from about 6 wt% to about 10 wt%, more preferably about 7 wt% of one or more radically-curable monomers and/or oligomers, other than polysiloxanes;
c) from about 1 wt% to about 7 wt%, preferably from about 2 wt% to about 6 wt%, more preferably about 5.5 wt% of a cationic photoinitiator;
d) from about 0.5 wt% to about 3 wt%, preferably from about 0.75 wt% to about 1.5 wt%, more preferably about 1 wt% of a free-radical photoinitiator;
e) from about 0.5 wt% to about 5 wt% of a (meth)acrylate group-bearing polysiloxane having a number average molecular weight ($M_n$) between about 1,000 and about 8,000 g/mol eq PS; and
f) from about 0.5 wt% to about 5 wt% of a (meth)acrylate group-bearing polysiloxane having a number average molecular weight ($M_n$) between about 10,000 and about 20,000 g/mol eq PS;

wherein the weight percents are based on the total weight of the radiation-curable protective varnish.

In a second aspect, the invention provides a process for coating a security document comprising a substrate and optionally one or more security features applied on or inserted into a portion of the substrate, wherein said process comprises the following steps:

**i)** applying, preferably by a printing method selected from flexography printing, inkjet printing, and screen-printing, the radiation-curable protective varnish of the invention on a surface of the substrate and/or a surface of the one or more security features of the security document to form an un-cured varnish layer; and
**ii)** curing the un-cured varnish layer by exposure to UV light to form a protective coating covering at least partially the surface of the substrate and/or the surface of the one or more security features of the security document.

In a third aspect, the invention provides a document, preferably a security document, having a protective coating on at least a portion of a surface thereof, the protective coating resulting from radiation-curing of a radiation-curable protective varnish of the invention.

## DETAILED DESCRIPTION

### Definitions

The following definitions are to be used to interpret the meaning of the terms discussed in the description and recited in the claims.

As used herein, the article "a/an" indicates one as well as more than one and does not necessarily limit its referent noun to the singular.

As used herein, the term "about" means that the amount or value in question may be the specific value designated or some other value in its neighborhood. Generally, the term "about" denoting a certain value is intended to denote a range within $\pm$ 5% of the value. As one example, the phrase "about 100" denotes a range of 100 $\pm$ 5, i.e. the range from 95 to 105. Preferably, the range denoted by the term "about" denotes a range within $\pm$ 3% of the value, more preferably $\pm$ 1 %. Generally, when the term "about" is used, it can be expected that similar results or effects according to the invention can be obtained within a range of $\pm$5% of the indicated value.

As used herein, the term "and/or" means that either all or only one of the elements of said group may be present. For example, "A and/or B" means "only A, or only B, or both A and B". In the case of "only A", the term also covers the possibility that B is absent, i.e. "only A, but not B".

The term "comprising" as used herein is intended to be non-exclusive and open-ended. Thus, for instance a solution comprising a compound A may include other compounds besides A. However, the term "comprising" also covers, as a particular embodiment thereof, the more restrictive meanings of "consisting essentially of" and "consisting of", so that for instance "a solution comprising A, B, and optionally C" may also (essentially) consist of A, and B, or (essentially) consist of A, B, and C.

Where the present description refers to "preferred" embodiments/features, combinations of these "preferred" embodiments/features are also deemed to be disclosed as long as the specific combination of "preferred" embodiments/features is technically meaningful.

As used herein, the term "one or more" means one, two, three, four, etc.

As used herein, the term "security document" refers to a document having a value such as to render it potentially liable to attempts at counterfeiting or illegal reproduction and which is usually protected against counterfeit or fraud by at least one security feature. Typical examples of security documents include without limitation banknotes, deeds, tickets, checks, vouchers, fiscal stamps and tax labels, agreements and the like, identity documents such as passports, identity cards, visas, bank cards, credit cards, transaction cards, access documents, entrance tickets and the like.

As used herein "molecular weight" refers to the number average molecular weight ($M_n$).

As used herein the expression "(meth)acrylate" is meant to encompass both acrylate and methacrylate moieties.

As used herein, the expression "eq PS" means "equivalent to polystyrene" and is used to indicate that the quoted molecular weight is measured using GPC against polystyrene standards.

### Abbreviations

The following abbreviations are used in the present description, and have the following meanings:

| | |
|---|---|
| PFAS | per- and polyfluoroalkyl substances |
| HSE | health, safety and environmental |
| PS | polystyrene |
| GPC | gel permeation chromatography |

A hybrid varnish refers to a varnish containing both cationically-curable monomers and/or oligomers, and radically-curable monomers and/or oligomers.

The radiation-curable protective varnishes of the invention contain from about 50 wt% to about 85 wt% of either a cycloaliphatic epoxide, or a mixture of a cycloaliphatic epoxide and one or more cationically curable monomers other than the cycloaliphatic epoxide. A cycloaliphatic epoxide is a cationically curable monomer containing at least a substituted or unsubstituted epoxycyclohexyl residue:

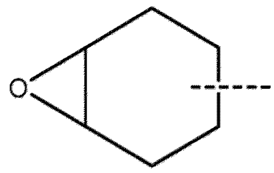

Preferably, the cycloaliphatic epoxide comprises at least one cyclohexane ring, and at least two epoxide groups. More preferably, the cycloaliphatic epoxide is a compound of general formula **(III):**

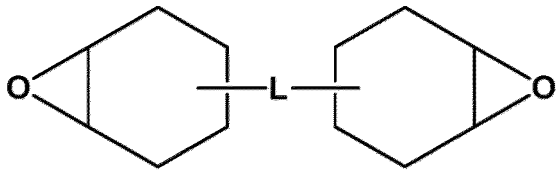

**(III)**

wherein **-L-** represents a single bond or a divalent group comprising one or more atoms. The cycloaliphatic epoxide of general formula **(III)** is optionally substituted by one or more linear or branched alkyl radicals containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl).

In the general formula **(III),** the divalent group **-L-** may be a straight- or branched-chain alkylene group comprising from one to eighteen carbon atoms. Examples of said straight- or branched-chain alkylene group include without limitation methylene group, methylmethylene group, dimethylmethylene group, ethylene group, propylene group, and trimethylene group.

In the general formula **(III),** the divalent group **-L-** may be a divalent alicyclic hydrocarbon group or cycloalkydene group, such as 1,2-cyclopentylene group, 1,3-cyclopentylene group, cyclopentylidene group, 1,2-cyclohexylene group, 1,3-cyclohexylene group, 1,4-cyclohexylene group, and cyclohexylidene group.

In the general formula **(III), -L-** may be a divalent group comprising one or more oxygen-containing linkage groups, wherein said oxygen-containing linkage groups are selected from the group consisting of -C(=O)-, -OC(=O)O-, -C(=O)O-, and -O-. Preferably, the cycloaliphatic epoxide is a cycloaliphatic epoxide of general formula **(III),** wherein **-L-** is a divalent group comprising one or more oxygen-containing linkage groups, wherein said oxygen-containing linkage groups are selected from the group consisting of -C(=O)-, - OC(=O)O-, -C(=O)O-, and -O-, and more preferably a cycloaliphatic epoxide of general formula **(III-a), (III-b),** or **(III-c),** as defined below:

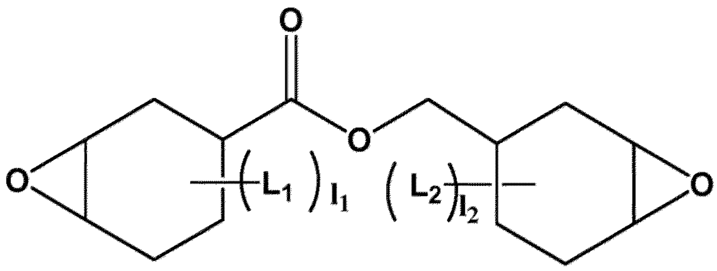

**(III-a)**

wherein

- **$L_1$** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl);
- **$L_2$** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl); and
- **$l_1$** and **$l_2$** are independently of each other integers comprised between 0 and 9, preferably comprised between 0 and 3, and more preferably 0;

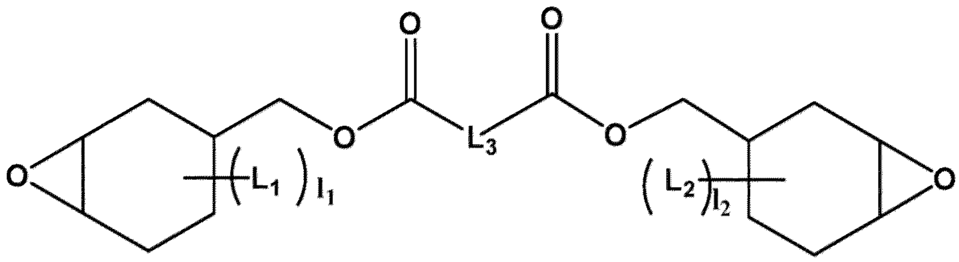

**(III-b)**

wherein

**$L_1$** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl);
**$L_2$** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl); and
**$l_1$** and **$l_2$** are independently of each other integers comprised between 0 and 9, preferably comprised between 0 and 3, and more preferably 0;
**$-L_3-$** is a single bond or a linear or branched divalent hydrocarbon group containing from one to ten carbon atoms, and preferably containing from three to eight carbon atoms, such as alkylene groups including trimethylene, tetramethylene, hexamethylene, and 2-ethylhexylene, and cycloalkylene groups such as 1,2-cyclohexylene group, 1,3-cyclohexylene group, and 1,4-cyclohexylene group, and cyclohexylidene group;

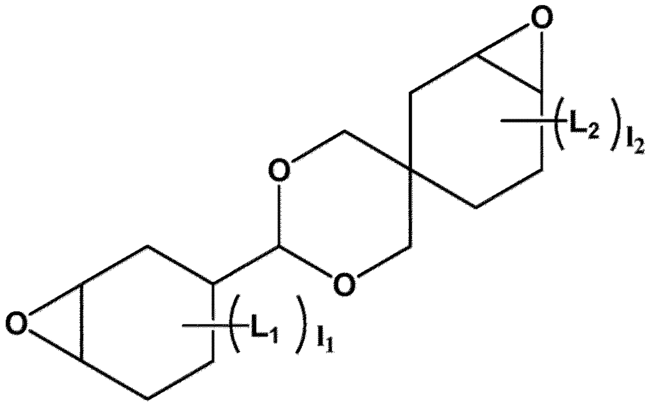

**(III-c)**

wherein

**$L_1$** can be the same, or different in each occurrence and is a linear or branched alkyl radical containing from one to three carbon atoms, such as methyl, ethyl, *n*-propyl, and *i*-propyl;
**$L_2$** can be the same, or different in each occurrence and is a linear or branched alkyl radical containing from one to three carbon atoms, such as methyl, ethyl, *n*-propyl, and *i*-propyl; and
**$l_1$** and **$l_2$** are independently of each other integers comprised between 0 and 9, preferably comprised between 0 and 3, and more preferably 0.

Preferred cycloaliphatic epoxides of general formula **(III-a)** include, but are not limited to: 3,4-epoxycyclohexylmethyl-3,4-epoxycyclohexanecarboxylate (CAS Nr 2386-87-0), 3,4-epoxy-6-methyl-cyclohexyl-methyl-3,4-epoxy-6-methylcyclohexanecarboxylate, 3,4-epoxy-2-methylcyclohexylmethyl-3,4-epoxy-2-methyl-cyclohexanecarboxylate, and 3,4-epoxy-4-methylcyclohexylmethyl-3,4-epoxy-4-methylcyclohexanecarboxylate.
Preferred cycloaliphatic epoxides of general formula **(III-b)** include, but are not limited to: bis(3,4-epoxycyclohexylmethyl)adipate, bis(3,4-epoxy-6-methylcyclohexylmethyl)adipate, bis(3,4-epoxycyclohexylmethyl)oxalate, bis(3,4-epoxycyclohexylmethyl)pimelate, and bis(3,4-epoxycyclohexylmethyl)sebacate.
A preferred cycloaliphatic epoxide of general formula **(III-c)** is 2-(3,4-epoxycyclohexyl-5,5-spiro-3,4-epoxy)cyclohexane-meta-dioxane.

Further cycloaliphatic epoxides include a cycloaliphatic epoxide of general formula **(IV-a)** and a cycloaliphatic epoxide of general formula **(IV-b),** which are optionally substituted by one or more linear or branched alkyl groups containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl)

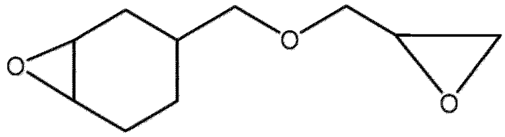

**(IV-a)**

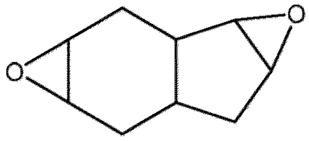

**(IV-b)**.

The cycloaliphatic epoxides may be hydroxy modified or (meth)acrylate modified. Examples are commercially available under the name Cyclomer A400 (CAS: 64630-63-3) and Cyclomer M100 (CAS number: 82428-30-6) by Daicel Corp., or TTA 15 and TTA16 by TetraChem/Jiangsu.

The radiation-curable protective varnishes of the invention may optionally comprise one or more cationically curable monomers other than the cycloaliphatic epoxide. The one or more cationically curable monomers other than the cycloaliphatic epoxide are selected from the group consisting of: vinyl ethers, propenyl ethers, cyclic ethers other than a cycloaliphatic epoxide, including epoxides other than a cycloaliphatic epoxide, oxetanes, and tetrahydrofuranes, lactones, cyclic thioethers, vinyl thioethers, propenyl thioethers, hydroxyl-containing compounds, and mixtures thereof, preferably from the group consisting of: vinyl ethers, cyclic ethers other than a cycloaliphatic epoxide, particularly oxetanes, and mixtures thereof.

Vinyl ethers accelerate curing and reduce tackiness, thus limiting the risk of blocking and set-off when the coated sheets are put in stacks just after coating. They also improve the physical and chemical resistance of the protective coating, and enhance its flexibility and its adhesion to the substrate, which is particularly advantageous for coating plastic and polymer substrates. Vinyl ethers also help reducing the viscosity of the varnish, while strongly co-polymerizing with the varnish vehicle. Examples of preferred vinyl ethers to be used in the radiation-curable protective varnish claimed herein include methyl vinyl ether, ethyl vinyl ether, *n*-propyl vinyl ether, *n*-butyl vinyl ether, *iso*-butyl vinyl ether, ethylhexyl vinyl ether, octadecyl vinyl ether, dodecyl vinyl ether, isopropyl vinyl ether, *tert*-butyl vinyl ether, *tert*-amyl vinyl ether, cyclohexyl vinyl ether, cyclohexanedimethanol monovinyl ether, cyclohexanedimethanol divinyl ether, 4-(vinyloxy methyl)cyclohexylmethyl benzoate, phenyl vinyl ether, methylphenyl vinyl ether, methoxyphenyl vinyl ether, 2-chloroethyl vinyl ether, 2-hydroxyethyl vinyl ether, 4-hydroxybutyl vinyl ether, 1,6-hexanediol monovinyl ether, ethylene glycol divinyl ether, ethylene glycol monovinyl ether, 1, 4-butanediol divinyl ether, 1,6-hexanediol divinyl ether, 4-(vinyloxy)butyl benzoate, bis[4-(vinyl oxy)butyl]adipate, bis[4-(vinyloxy)butyl]succinate, bis[4-(vinyloxymethyl) cyclohexylmethyl] glutarate, 4-(vinyloxy)butyl stearate, trimethylolpropane trivinyl ether, propenyl ether of propylene carbonate, diethylene glycol monovinyl ether, diethylene glycol divinyl ether, ethylene glycol butylvinyl ether, dipropylene glycol divinyl ether, triethylene glycol divinyl ether, triethylene glycol methyl vinyl ether, triethylene glycol monobutyl vinylether, tetraethylene glycol divinyl ether, poly(tetrahydrofuran) divinyl ether, polyethyleneglycol-520 methyl vinyl ether, pluriol-E200 divinyl ether, tris[4-(vinyloxy) butyl]trimellitate, 1,4-bis(2-vinyloxyethoxy) benzene, 2,2-bis(4-vinyloxyethoxyphenyl)propane, bis[4-(vinyloxy)methyl] cyclohexyl] methyl] terephthalate, bis[4-(vinyloxy)methyl]cyclohexyl]methyl] isophthalate. Suitable vinyl ethers are commercially sold by BASF under the designation EVE, IBVE, DDVE, ODVE, BDDVE, DVE-2, DVE-3, CHVE, CHDM-di, HBVE. The one or more vinyl ethers may be hydroxy modified or (meth)acrylate modified (for example: VEEA, 2-(2-vinyloxyethoxy)ethyl acrylate from Nippon Shokubai (CAS: 86273-46-3)).

The use of epoxides other than a cycloaliphatic epoxide in the radiation-curable protective varnish of the invention aids in accelerating curing and reducing tackiness, as well as in reducing the viscosity of the varnish, while strongly co-polymerizing with the varnish vehicle. Preferred examples of an epoxide other than a cycloaliphatic epoxide include, but are not limited to, cyclohexane dimethanol diglycidylether, poly(ethyleneglycol) diglycidyl ether, poly(propyleneglycol) diglycidyl ether, butanediol diglycidyl ether, hexanediol diglycidyl ether, bisphenol-A diglycidyl ether, neopentylglycol diglycidylether, trimethylolpropane triglycidyl ether, glycerol triglycidyl ether, pentaerythritol tetraglycidyl

ether, butyl glycidyl ether, *p*-tert-butyl phenyl glycidyl ether, hexadecyl glycidyl ether, 2-ethyl-hexyl glycidyl ether, octyl glycidyl ether, decyl glycidyl ether, dodecyl glycidyl ether, tetradecyl glycidyl ether, $C_{12}/C_{14}$-alkyl glycidyl ether, $C_{13}/C_{15}$-alkyl glycidyl ether and mixtures thereof. Suitable epoxides other than a cycloaliphatic epoxide are commercially sold by EMS Griltech under the trademark Grilonit® (e.g. Grilonit® V51-63 or RV 1806).

Preferably, the radiation-curable protective varnish of the invention comprising the mixture of a cycloaliphatic epoxide and one or more cationically curable monomers other than the cycloaliphatic epoxide, contains at least 55 wt% of the cycloaliphatic epoxide, the weight percent being based on the total weight of the radiation-curable protective varnish.

In a preferred embodiment the radiation-curable protective varnish of the invention comprises from about 60 wt% to about 85 wt%, preferably from about 65 wt% to about 80 wt%, more preferably from about 70 wt% to about 80 wt%, of a mixture of a cycloaliphatic epoxide and one or more oxetanes.

Examples of oxetanes include, but are not limited to, trimethylene oxide, 3,3-dimethyloxetane (CAS Nr 6921-35-3), 3-ethyloxetane-3-methanol (CAS Nr 3047-32-3), 3-ethyl-3-[(2-ethylhexyloxy) methyl]oxetane (CAS Nr 298695-60-0), 3-ethyl-3-phenoxymethyl oxetane (CAS Nr 3897-65-2), bis ([1-ethyl(3-oxetanyl)]methyl) ether (CAS Nr 18934-00-4), 1,4-bis [3-ethyl-3-oxetanyl methoxy)methyl]benzene (CAS Nr 142627-97-2), 3,3-dimethyl-2(4-methoxyphenyl)-oxetane (CAS Nr 74267-45-1), 4,4-bis(3-ethyl-3-oxetanyl)methoxymethyl]biphenyl (CAS Nr 358365-48-7) and (3-ethyl-3-oxetanyl)methyl methacrylate (CAS Nr 37674-57-0). Preferred oxetanes are 3-ethyl-3-hydroxymethyl oxetane (sold by Perstorp under the tradename *Curalite*™Ox), bis ([1-ethyl(3-oxetanyl)]methyl) ether (sold by Perstorp under the tradename *Curalite*™OxPlus), 3-ethyl-3-phenoxymethyl oxetane (sold by Arkema under the tradename UviCure S140), 1,4-bis [3-ethyl-3-oxetanyl methoxy)methyl]benzene (sold by Arkema under the tradename UviCure S150), 4,4-bis(3-ethyl-3-oxetanyl)methoxymethyl]biphenyl (sold by Arkema under the tradename UviCure S160) and (3-ethyl-3-oxetanyl) methyl methacrylate (sold by Arkema under the tradename UViCure S170). In a preferred embodiment, the oxetane is 3-ethyloxetane-3-methanol.

The cycloaliphatic epoxide, or a mixture of a cycloaliphatic epoxide and one or more cationically curable monomers other than the cycloaliphatic epoxide, is preferably present at 55 to 80 wt%, more preferably at 70 to 80 wt%, based on the total weight of the radiation-curable protective varnish.

The radiation-curable protective varnishes of the invention comprise from about 3 wt% to about 15 wt%, preferably from about 6 wt% to about 10 wt%, more preferably about 7 wt% of one or more radically-curable monomers and/or oligomers, other than polysiloxanes.

The one or more radically-curable monomers are preferably selected from the group consisting of mono(meth) acrylates, di(meth)acrylates, tri(meth)acrylates, tetra(meth)acrylates and mixtures thereof, other than polysiloxanes, preferably from the group consisting of di(meth)acrylates, tri(meth)acrylates, and mixtures thereof, other than polysiloxanes.

Preferred examples of mono(meth)acrylates include 2-(2-ethoxyethoxy)ethyl (meth)acrylate, 2-phenoxyethyl (meth)acrylate, C12-C14 alkyl (meth)acrylate, C16-C18 alkyl (meth)acrylate, caprolactone (meth)acrylate, cyclic trimethylolpropane formal (meth)acrylate, nonylphenol (meth)acrylate, isobornyl (meth)acrylate, isodecyl (meth)acrylate, lauryl (meth)acrylate, stearyl (meth)acrylate, octyldecyl (meth)acrylate, tridecyl (meth)acrylate, methoxy polyethylene glycol) (meth)acrylate, polypropylene glycol (meth)acrylate, tetrahydrofurfuryl (meth)acrylate, 1,3-butylene glycol di(meth)acrylate, 1,4-butanediol di(meth)acrylate, 1,6-hexanediol di(meth)acrylate, 3-methyl-1,5-pentanedioldi(meth) acrylate, alkoxylated di(meth)acrylate, esterdiol di(meth)acrylate, as well as mixtures thereof.

Preferred examples of di(meth)acrylates include bisphenol A di(meth)acrylates, alkoxylated (such as for example ethoxylated and propoxylated) bisphenol A di(meth)acrylate, bisphenol A diglycidyl ether di(meth)acrylate, ethylene glycol di(meth)acrylate, diethylene glycol di(meth)acrylate, triethylene glycol di(meth)acrylate, tetraethylene glycol di(meth)acrylate, dipropyleneglycol di(meth)acrylate, tripropylene glycol di(meth)acrylate, polyethylene glycol di(meth)acrylate, neopentyl glycol di(meth)acrylate, tricyclodecane dimethanol di(meth)acrylate, as well as mixtures thereof.

Preferred examples of tri(meth)acrylates include trimethylolpropane tri(meth)acrylates, alkoxylated (such as for example ethoxylated and propoxylated) trimethylolpropane tri(meth)acrylates, alkoxylated (such as for example ethoxylated and propoxylated) glycerol tri(meth)acrylates, pentaerythritol tri(meth)acrylates, alkoxylated pentaerythritol tri(meth)acrylates, alkoxylated (such as for example ethoxylated and propoxylated) pentaerythritol tri(meth)acrylates, as well as mixtures thereof.

Preferred examples of tetra(meth)acrylates include ditrimethylolpropane tetra(meth)acrylates, pentaerythritol tetra(meth)acrylates, alkoxylated (such as for example ethoxylated and propoxylated) pentaerythritol tetra(meth)acrylates and mixtures thereof.

As used herein, the term "radically-curable oligomer" refers to a radically-curable (meth)acrylate oligomer, other than polysiloxanes, that may be branched or essentially linear, and may have terminal and/or pendant (meth)acrylate functional group(s), and having a number average molecular weight of greater than about 600 g/mol. Preferably, the radically-curable oligomer is selected from the group consisting of (meth)acrylic oligomers, urethane (meth)acrylate oligomers, polyester (meth)acrylate oligomers, polyether based (meth)acrylate oligomers, epoxy (meth)acrylate oligomers, and mixtures thereof, more preferably selected from the group consisting of polyester (meth)acrylate oligomers, epoxy (meth)acrylate oligomers, and mixtures thereof, other than polysiloxanes.

Suitable examples of epoxy (meth)acrylate oligomer include without limitation aliphatic epoxy (meth)acrylate oligomers, in particular mono(meth)acrylates, di(meth)acrylates and tri(meth)acrylates, and aromatic epoxy (meth) acrylate oligomers, other than polysiloxanes. Suitable examples of aromatic epoxy (meth)acrylate oligomers include bisphenol-A (meth)acrylate oligomers, such as bisphenol-A mono(meth)acrylates, bisphenol-A di(meth)acrylates and bisphenol-A tri(meth)acrylates as well as alkoxylated (such as for example ethoxylated and propoxylated) bisphenol-A (meth)acrylate oligomers such as for example alkoxylated bisphenol-A mono(meth)acrylates, alkoxylated bisphenol-A di(meth)acrylates and alkoxylated bisphenol-A tri(meth)acrylates, preferably alkoxylated bisphenol-A di(meth)acrylates.

In one embodiment, the one or more radically-curable monomer and/or oligomer is a mixture of glycerol propoxylated triacrylate (CAS Nr: 52408-84-1) and bisphenol-A epoxy acrylate oligomer (CAS Nr: 55818-57-0), more preferably a mixture of 23 wt% glycerol propoxylated triacrylate (CAS Nr: 52408-84-1) and 77 wt% bisphenol-A epoxy acrylate oligomer (CAS Nr : 55818-57-0).

The one or more radically-curable monomers and/or oligomers are preferably present at from about 6 wt% to about 10 wt%, more preferably about 7 wt%, based on the total weight of the radiation-curable protective varnish.

The radiation-curable protective varnish of the invention comprises from about 1 wt% to about 7 wt%, preferably from about 2 wt% to about 6 wt%, more preferably about 5.5 wt% of a cationic photoinitiator.

In one embodiment, the cationic photoinitiator is a diaryl iodonium salt or an arylsulphonium salt.

As used herein, the term "diaryl iodonium salt" refers to a cationic photoinitiator containing a diaryl iodonium as cationic moiety and any suitable anionic moiety including, but not limited to $BF_4^-$(tetrafluoroborate, CAS Nr 14874-70-5), $B(C_6F_5)_4^-$ (tetrakis(pentafluorophenyl)borate, CAS Nr 47855-94-7), $PF_6^-$ (hexafluorophosphate, CAS Nr 16919-18-9), $AsF_6^-$(hexafluoroarsenate, CAS Nr 16973-45-8), $SbF_6^-$(hexafluoroantimonate, CAS Nr 17111-95-4), $CF_3SO_3^-$ (trifluoromethanesulfonate, CAS Nr 37181-39-8), $(CH_3C_6H_4)SO_3^-$ (4-methylbenzenesulfonate, CAS Nr 16722-51-3), $(C_4F_9)SO_3^-$ (1,1,2,2,3,3,4,4,4-nonafluoro-1-butanesulfonate, CAS Nr 45187-15-3), $(CF_3)CO_2^-$ (trifluoroacetate, CAS Nr 14477-72-6), $(C_4F_9)CO_2^-$ (2,2,3,3,4,4,5,5,5-nonafluoro-1-pentanoate, CAS Nr 45167-47-3), and $(CF_3SO_2)_3C^-$ (tris(trifluoromethylsulfonyl)methide, CAS Nr 130447-45-9).

The two aryl groups of the diaryl iodonium cationic moiety may be independently of each other substituted by one or more linear or branched alkyl groups (such as for example methyl, ethyl, isopropyl, isobutyl, tertbutyl, undecyl, dodecyl, tridecyl, tetradecyl etc.) that are optionally substituted by one or more halogens and/or one or more hydroxy groups; one or more alkyloxy groups that are optionally substituted by one or more halogens and/or one or more hydroxy groups; one or more nitro groups; one or more halogens; one or more hydroxy groups; or a combination thereof. Examples of diaryl iodonium cationic moiety include bis(4-dodecylphenyl)iodonium (CAS Nr 71786-69-1), bis[4-(1,1-dimethylethyl) phenyl] iodonium (CAS Nr 61267-44-5), (4-isopropylphenyl)(4-methylphenyl)iodonium (CAS Nr 178233-71-1), bis(4-methylphenyl)iodonium (CAS Nr 46449-56-3), (4-methylphenyl)[4-(2-methylpropyl)phenyl]iodonium (CAS Nr 344562-79-4), bis(2,4-dimethylphenyl)]iodonium (CAS Nr 78337-07-2), bis(3,4-dimethylphenyl)]iodonium (CAS Nr 66482-57-3), (4-methylphenyl)(2,4,6-trimethylphenyl)iodonium (CAS Nr 758629-51-5), bis[(4-(2-methylpropyl)phenyl]iodonium (CAS Nr 157552-66-4), bis(4-butylphenyl]iodonium (CAS Nr 76310-29-7), bis(2,4,6-trimethylphenyl)iodonium (CAS Nr 94564-97-3), bis(4-hexylphenyl)iodonium (CAS Nr 249300-48-9), bis(4-decylphenyl)iodonium (CAS Nr 137141-44-7), (4-decylphenyl)(4-undecylphenyl)iodonium (CAS Nr 167997-83-3), bis(4-undecylphenyl)iodonium (CAS Nr 167997-61-7), bis(4-tridecylphenyl)iodonium (CAS Nr 124053-08-3), bis(4-tetradecylphenyl)iodonium (CAS Nr 167997-63-9), bis(4-hexadecylphenyl)iodonium (CAS Nr 137141-41-4), bis(4-heptadecylphenyl)iodonium (CAS Nr 144095-91-0), bis(4-octadecylphenyl)iodonium (CAS Nr 202068-75-5), (4-decylphenyl)(4-dodecylphenyl)iodonium (CAS Nr 167997-67-3), (4-decylphenyl)(4-tridecylphenyl)iodonium (CAS Nr 167997-77-5), (4-decylphenyl)(4-tetradecylphenyl)iodonium (CAS Nr 167997-81-1), (4-dodecylphenyl)(4-undecylphenyl)iodonium (CAS Nr 167997-71-9), (4-dodecylphenyl)(4-tridecylphenyl)iodonium (CAS Nr 167997-69-5), (4-dodecylphenyl)(4-tetradecylphenyl) iodonium (CAS Nr 167997-65-1), (4-tridecylphenyl)(4-undecylphenyl)iodonium (CAS Nr 167997-73-1), (4-tetradecylphenyl)(4-undecylphenyl) iodonium (CAS Nr 167997-79-7), (4-tetradecylphenyl)(4-tridecylphenyl)iodonium (CAS Nr 167997-75-3), p-(octyloxyphenyl) phenyliodonium (CAS Nr 121239-74-5), [4-[(2-hydroxytetradecyl)oxy]phenyl]phenyliodonium (CAS Nr 139301-14-7), phenyl[3-(trifluoromethyl)phenyl]iodonium (CAS Nr 789443-26-1), bis(4-fluorophenyl)iodonium (CAS Nr 91290-88-9), (4-nitrophenyl)phenyliodonium (CAS Nr 46734-23-0), and (4-nitrophenyl)(2,4,6-trimethylphenyl)iodonium (CAS Nr 1146127-10-7).

Preferably, the diaryl iodonium salt is of a compound of general formula **(II)**

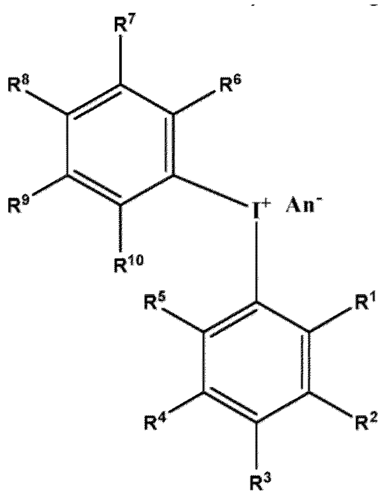

**(II)**

wherein

**$R^1$ - $R^{10}$** are independently of each other selected from hydrogen, a $C_1$-$C_{18}$-alkyl group, and $C_1$-$C_{12}$-alkyloxy group; and

**$An^-$** is an anion selected from $BF_4^-$, $B(C_6F_5)_4^-$, $PF_6^-$, $AsF_6^-$, $SbF_6^-$, $CF_3SO_3^-$, $(CH_3C_6H_4)SO_3^-$, $(C_4F_9)SO_3^-$, $(CF_3)CO_2^-$, $(C_4F_9)CO_2^-$, and $(CF_3SO_2)_3C^-$, preferably selected from $BF_4^-$, $B(C_6F_5)_4^-$, $PF_6^-$, $AsF_6^-$, $SbF_6^-$, and $CF_3SO_3^-$.

The term "$C_1$-$C_{18}$-alkyl group" as used herein refers to a saturated linear or branched-chain monovalent hydrocarbon radical of one to eighteen carbon atoms ($C_1$-$C_{18}$). Examples of $C_1$-$C_{18}$-alkyl groups include, but are not limited to methyl (Me, $-CH_3$), ethyl (Et, $-CH_2CH_3$), 1-propyl (*n*-Pr, *n*-propyl, $-CH_2CH_2CH_3$), 2-propyl (*i*-Pr, *iso*-propyl, $-CH(CH_3)_2$), 1-butyl (*n*-Bu, *n*-butyl, $-CH_2CH_2CH_2CH_3$), 2-methyl-1-propyl (*i*-Bu, *i*-butyl, $-CH_2CH(CH_3)_2$), 2-butyl (*s*-Bu, *s*-butyl, $-CH(CH_3)CH_2CH_3$), 2-methyl-2-propyl (*t*-Bu, *t*-butyl, $-C(CH_3)_3$), 1-pentyl (n-pentyl, $-CH_2CH_2CH_2CH_2CH_3$), 2-pentyl ($-CH(CH_3)CH_2CH_2CH_3$), 3-pentyl ($-CH(CH_2CH_3)_2$), 2-methyl-2-butyl ($-C(CH_3)_2CH_2CH_3$), 3-methyl-2-butyl ($-CH(CH_3)CH(CH_3)_2$), 3-methyl-1-butyl ($-CH_2CH_2CH(CH_3)_2$), 2-methyl-1-butyl ($-CH_2CH(CH_3)CH_2CH_3$), 1-hexyl ($-CH_2CH_2CH_2CH_2CH_2CH_3$), 2-hexyl ($-CH(CH_3)CH_2CH_2CH_2CH_3$), 3-hexyl ($-CH(CH_2CH_3)(CH_2CH_2CH_3)$), 2-methyl-2-pentyl ($-C(CH_3)_2CH_2CH_2CH_3$), 3-methyl-2-pentyl ($-CH(CH_3)CH(CH_3)CH_2CH_3$), 4-methyl-2-pentyl ($-CH(CH_3)CH_2CH(CH_3)_2$), 3-methyl-3-pentyl ($-C(CH_3)(CH_2CH_3)_2$), 2-methyl-3-pentyl ($-CH(CH_2CH_3)CH(CH_3)_2$), 2,3-dimethyl-2-butyl ($-C(CH_3)_2CH(CH_3)_2$), 3,3-dimethyl-2-butyl ($-CH(CH_3)C(CH_3)_3$), 1-heptyl ($-CH_2(CH_2)_5CH_3$), 1-octyl ($-CH_2(CH_2)_6CH_3$), 1-nonyl ($-CH_2(CH_2)_7CH_3$), 1-decyl ($-CH_2(CH_2)_8CH_3$), 1-undecyl ($-CH_2(CH_2)_9CH_3$) and 2-dodecyl ($-CH_2(CH_2)_{10}CH_3$).

The term "$C_1$-$C_{12}$-alkyloxy" means a $C_1$-$C_{12}$-alkyl group (i.e. a saturated linear or branched-chain monovalent hydrocarbon radical of one to twelve carbon atoms ($C_1$-$C_{12}$)), which is linked to the rest of the molecule through an oxygen atom.

Preferably, in general formula **(II)** the substituents **$R^1$, $R^2$, $R^4$, $R^5$, $R^6$, $R^7$, $R^9$** and **$R^{10}$** represent hydrogen. Hence, a preferred cationic photoinitiator is a compound of general formula **(II-a)**

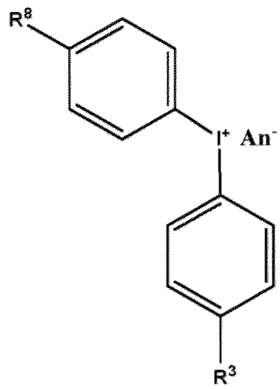

**(II-a)**

wherein

**An**$^-$ has the meaning defined herein; and

$\mathbf{R^3}$ and $\mathbf{R^8}$ are independently of each other selected from hydrogen, a $C_1$-$C_{18}$-alkyl group, and a $C_1$-$C_{12}$-alkyloxy group, preferably selected from hydrogen and a $C_1$-$C_{18}$-alkyl group, more preferably selected from hydrogen and a $C_1$-$C_{12}$-alkyl group, and especially preferably selected from a $C_1$-$C_4$-alkyl group, such as methyl (Me, $-CH_3$), ethyl (Et, $-CH_2CH_3$), 1-propyl (*n*-Pr, *n*-propyl, $-CH_2CH_2CH_3$), 2-propyl (*i*-Pr, *iso*-propyl, $-CH(CH_3)_2$), 1-butyl (*n*-Bu, *n*-butyl, $-CH_2CH_2CH_2CH_3$),

2-methyl-1-propyl (*i*-Bu, *i*-butyl, $-CH_2CH(CH_3)_2$), 2-butyl (*s*-Bu, *s*-butyl, $-CH(CH_3)CH_2CH_3$), 2-methyl-2-propyl (*t*-Bu, *t*-butyl, $-C(CH_3)_3$).

Preferably, in general formulae **(II)** and **(II-a)**, the anion **An**$^-$ represents $PF_6^-$.

Particularly suitable diaryl iodonium salts of general formula **(II)** and **(II-a)** are commercially available known under the name DEUTERON UV 1240 (CAS Nr 71786-70-4), DEUTERON UV 1242 (mixture of CAS Nr 71786-70-4 and CAS Nr 68609-97-2), DEUTERON UV 2257 (mixture of CAS Nr 60565-88-0 and CAS Nr 108-32-7), DEUTERON UV 1250 (mixture of branched bis-(($C_{10}$-$C_{13}$)alkylphenyl)-iodoniumhexafluoroantimonate and CAS Nr 68609-97-2), and DEUTERON UV 3100 (mixture of branched bis-(($C_7$-$C_{10}$)alkylphenyl)-iodonium hexafluorophosphate and CAS Nr. 68609-97-2), all available from DEUTERON, OMN!CAT 250 (CAS Nr 344562-80-7), OMN!CAT 440 (CAS Nr 60565-88-0), and OMNICAT 445 (mixture of CAS Nr 60565-88-0 and CAS Nr 3047-32-3), all available from IGM Resins, SpeedCure 937 (CAS Nr 71786-70-4), SpeedCure 938 (CAS Nr 61358-25-6) and SpeedCure 939 (CAS Nr 178233-72-2), all available from Arkema.

Suitable examples of sulfonium ions include without limitation triarylsulfonium ions, diphenyl[4-(phenylthio) phenyl] sulfonium ion, bis[4-(diphenylsulfonio)phenyl] sulfonium ion, triphenylsulfonium ions and tris[4-(4-acetylphenyl) sulfanylphenyl] sulfonium ion. Particularly suitable examples of sulfonium salts for the present invention are sulfonium, diphenyl[(phenylthio)phenyl]-, hexafluorophosphate(1-) (1:1) (CAS Nr: 68156-13-8), sulfonium, S,S'-(thiodi-4,1-phenylene)bis[S,S-diphenyl-, hexafluorophosphate(1-) (1:2), or mixtures of these.

The radiation-curable protective varnish of the invention comprises from about 0.5 wt% to about 3 wt%, preferably from about 0.75 wt% to about 1.5 wt%, more preferably about 1 wt% of a free-radical photoinitiator. The one or more free-radical photoinitiators are preferably selected from the group consisting of hydroxyketones (e.g. alpha-hydroxyketones), alkoxyketones (e.g. alpha-alkoxyketones), acetophenones, benzophenones, ketosulfones, benzyl ketals, benzoin ethers, phosphine oxides, phenylglyoxylates, thioxanthones and mixtures thereof, more preferably selected form the group consisting of alpha-hydroxyketones.

Suitable alpha-hydroxyketones include without limitation (1-[4-(2-hydroxyethoxy)-phenyl]-2-hydroxy-2-methyl-1-propan-1-one), 1-hydroxycyclohexyl phenyl ketone, 2-hydroxy-2-methyl-1-phenylpropan-1-one, 2-hydroxy-2-methyl-1-(4-*tert*-butyl)phenylpropan-1-one, 2-hydroxy-1-[4-[[4-(2-hydroxy-2-methylpropanoyl)phenyl]methyl]phenyl]-2-methylpropan-1-one, 2-hydroxy-1-[4-[4-(2-hydroxy-2-methylpropanoyl)phenoxy]phenyl]-2-methylpropan-1-one, 2-hydroxy-1-[1-[4-(2-hydroxy-2-methylpropanoyl)phenyl]-1,3,3-trimethylindan-5-yl]-2-methylpropan-1-one,

poly(oxy-1,2-ethanediyl), $\alpha$-(1,1-dimethyl-2-oxo-2-phenylethyl)-$\omega$-hydroxy-, oligo[2-hydroxy-2-methyl-1-[4-(1-methylvinyl)phenyl]propanone], 2-hydroxy-4'-hydroxyethoxy-2-methylpropiophenone (CAS Nr: 106797-53-9), and oligo[2-hydroxy-2-methyl-1-[4-(1-methylvinyl)phenyl]propanone].

Suitable acetophenones include without limitation 2,2-diethoxyacetophenone, and 2-methoxy-2-phenylacetophenone.

Suitable benzophenones include without limitation benzophenone, polymeric benzophenone derivatives, 2-methylbenzophenone, 3-methylbenzophenone, 4-methylbenzophenone, 2,4,6-trimethylbenzophenone, 3,3'-dimethyl-4-methoxybenzophenone, 4-phenylbenzophenone, 4-chlorobenzophenone, methyl-2-benzoylbenzoate, 4-(4-methylphenylthio)benzophenone, 4-hydroxybenzophenone laurate, and a mixture of 50% benzophenone and 50% 1-hydroxycyclohexyl phenyl ketone.

Suitable ketosulfones include without limitation 1-[4-(4-benzoylphenylsulfanyl)phenyl]-2-methyl-2-(4-methylphenylsulfonyl)propan-1-one.

Suitable benzyl ketals include without limitation 2,2-dimethoxy-2-phenylacetophenone.

Suitable benzoin ethers include without limitation 2-ethoxy-1,2-diphenylethanone, 2-isopropoxy-1,2-diphenylethanone, 2-isobutoxy-1,2-diphenylethanone, 2-butoxy-1,2-diphenylethanone, 2,2-dimethoxy-1,2-diphenylethanone, and 2,2-diethoxyacetophenone.

Suitable phosphine oxides include without limitation 2,4,6-trimethylbenzoyldiphenylphosphine oxide, ethyl (2,4,6-trimethylbenzoyl)phenylphosphinate, phenylbis(2,4,6-trimethylbenzoyl)phosphine oxide, bis(2,6-dimethoxybenzoyl)-2,4,4-trimethylpentylphosphine oxide, substituted acyl-phosphine oxides, a mixture of diphenyl(2,4,6-trimethylbenzoyl)phosphine oxide and 2-hydroxy-2-methylpropiophenone, a mixture of phenylbis(2,4,6-trimethylbenzoyl)phosphine oxide and 2-hydroxy-2-methylpropiophenone, a mixture of ethyl(2,4,6-trimethylbenzoyl)phenylphosphinate and 2-hydroxy-2-methylpropiophenone, and a mixture of phenylbis(2,4,6-trimethylbenzoyl)phosphine oxide and ethyl (2,4,6-trimethylbenzoyl)phenylphosphinate.

Suitable thioxanthones include without limitation 2-methyl thioxanthone, 2,4-diethylthioxanthone, 2-isopropylthioxanthone, 1-chloro-4-propoxythioxanthone, and polymeric thioxanthone derivatives.

If it is desired to cure the radiation-curable protective varnish of the invention using UV-LED radiation (i.e. light in the UV-A region), it is advantageous to include a photosensitizer, for example a thioxanthone derivative, together with one or more diaryl iodonium photoinitiators.

If it is desired to cure the radiation-curable protective varnish of the invention using UV-LED radiation (i.e. light in the UV-A region) and if it is desired to have low fluorescence in response to 254 nm excitation and 366 nm excitation that does not impair the machine detection and/or human recognition of luminescent security features excitable by UV light, in particular with UV light having a wavelength such as 254 nm or 366 nm, contained by the coated security documents, it is advantageous to use a free-radical photoinitiator selected from the group consisting of alpha-hydroxyketones, alpha-alkoxyketones, benzyl diketals, benzoin ethers, phosphine oxides, phenylglyoxylates, and mixtures thereof and to include a polymeric photosensitizer comprising thioxanthone moieties, for example, as disclosed in WO2022/258704A1, in particular as used in Examples E1-E10 of WO2022/258704A1.

Suitable phenylglyoxylates include without limitation methyl benzoylformate, 2-[2-oxo-2-phenyl-acetoxy-ethoxy]ethyl 2-oxo-2-phenylacetate, and a mixture of 2-[2-oxo-2-phenyl-acetoxy-ethoxy]ethyl 2-oxo-2-phenylacetate and oxy-phenyl-acetic acid 2-[2-hydroxy-ethoxy]-ethyl ester.

The radiation-curable protective varnish of the invention may contain a mixture of the above-identified free-radical photoinitiators. Such mixtures include for example a mixture of 2,4,6-trimethylbenzoyldiphenylphosphine oxide (CAS Nr 75980-60-8) and 2-hydroxy-2-methyl-1-phenylpropan-1-one (CAS Nr 7473-98-5), sold e.g. by IGM Resins under the tradename Omnirad 4265; a mixture of phenylbis(2,4,6-trimethylbenzoyl)phosphine oxide (CAS Nr 162881-26-7), ethyl(2,4,6-trimethylbenzoyl)phenylphosphinate (CAS Nr 84434-11-7) and 2-hydroxy-2-methylpropiophenone (CAS Nr 7473-98-5), sold e.g. by IGM Resins under the tradename Omnirad 2022; a mixture of ethyl(2,4,6-trimethylbenzoyl) phenylphosphinate (CAS Nr 84434-11-7) and phenylbis(2,4,6-trimethylbenzoyl)phosphine oxide (CAS Nr 162881-26-7), sold e.g. by IGM Resins under the tradename Omnirad 2100; a mixture of 2-hydroxy-2-methylpropiophenone (CAS Nr 7473-98-5) and 1-hydroxycyclohexyl phenyl ketone (CAS Nr 947-19-3), sold e.g. by IGM Resins under the tradename Omnirad 1000; a mixture of oligo[2-hydroxy-2-methyl-1-[4-(1-methylvinyl)phenyl]propanone] (CAS Nr 163702-01-0) and 2-hydroxy-2-methylpropiophenone (CAS Nr 7473-98-5), sold e.g. by IGM Resins under the tradename Esacure KIP100F; a mixture of 2-hydroxy-2-methylpropiophenone (CAS Nr 7473-98-5), ethyl(2,4,6-trimethylbenzoyl)phenylphosphinate (CAS Nr 84434-11-7) and oligo[2-hydroxy-2-methyl-1-[4-(1-methylvinyl)phenyl]propanone] (CAS Nr 163702-01-0), sold by IGM Resins under the tradename Omnirad BL 723; as well as a mixture of 2-hydroxy-2-methylpropiophenone (CAS Nr 7473-98-5), oligo[2-hydroxy-2-methyl-1-[4-(1-methylvinyl)phenyl]propanone] (CAS Nr 163702-01-0), ethyl(2,4,6-trimethylbenzoyl)phenylphosphinate (CAS Nr 84434-11-7) and 2,2-dimethoxy-1,2-diphenylethan-1-one (CAS Nr 24650-42-8), sold by IGM Resins under the tradename Omnirad BL 724.

Preferably, the one or more free-radical photoinitiators are selected from alpha-hydroxy ketones, in particular 2-hydroxy-4'-(2-hydroxyethoxy)-2-methylpropiophenone (Omnirad 2959).

The radiation-curable protective varnish of the invention comprises two different (meth)acrylate-bearing polysiloxanes having different number average molecular weights. The polysiloxanes are preferably selected from non-ionic surfactants comprising a silicone backbone containing randomly distributed recurring units selected from di(methyl) siloxane ($-(CH_3)_2SiO-$) and/or methyl-($C_2$-$C_{10}$-alkyl)-siloxane ($-(CH_3)(C_2$-$C_{10}$-alkyl$)SiO-$), wherein one or more methyl groups and/or $C_2$-$C_{10}$-alkyl groups may be independently of each other substituted by an aryl group, a polyester, and presenting one or more terminal and/or pendant (meth)acrylate groups, wherein the silicone backbone may be connected directly or *via* a spacer to the one or more terminal and/or pendant (meth)acrylate groups.

The radiation-curable protective varnish of the invention comprises from about 0.5 wt% to about 5 wt% of a (meth) acrylate group-bearing polysiloxane having a number average molecular weight between about 1,000 and about 8,000 g/mol eq PS, based on the total weight of the radiation-curable protective varnish.

Preferably the (meth)acrylate group-bearing polysiloxane having a number average molecular weight between about 1,000 and about 8,000 g/mol eq PS is selected from those having a (meth)acrylate functionality of about 1 to about 4, more preferably about 2, in particular mono(meth)acrylates, di(meth)acrylates, tri(meth)acrylates and tetra(meth)acrylates.

In one embodiment, the (meth)acrylate group-bearing polysiloxane having a number average molecular weight between about 1,000 and about 8,000 g/mol eq PS is selected from those having a (meth)acrylate functionality of about 2.

In one embodiment, the (meth)acrylate group-bearing polysiloxane having a number average molecular weight between about 1,000 and about 8,000 g/mol eq PS has a number average molecular weight between about 2,000 and about 7,500 g/mol eq PS, preferably between about 3,000 and about 7,000 g/mol eq PS.

In another embodiment, the (meth)acrylate group-bearing polysiloxane having a number average molecular weight between about 1,000 and about 8,000 g/mol eq PS is selected from those having a (meth)acrylate functionality of about 1 to about 4, preferably about 2. Examples include mono(meth)acrylates, di(meth)acrylates, tri(meth)acrylates and tetra(meth)acrylates, having a number average molecular weight between about 2,000 and about 7,500 g/mol eq PS,

preferably between 3,000 and 7,000 g/mol eq PS.

In one embodiment, the (meth)acrylate group-bearing polysiloxane having a number average molecular weight between about 1,000 and about 8,000 g/mol eq PS has a number average molecular weight of about 6,522 g/mol eq PS.

In a preferred embodiment, the (meth)acrylate group-bearing polysiloxane having a number average molecular weight between about 1,000 and about 8,000 g/mol eq PS is a polyester-modified, acrylate functionalized polydimethylsiloxane, having a number average molecular weight of about 6,522 g/mol eq PS and an acrylate functionality of about 2.

The (meth)acrylate group-bearing polysiloxane having a number average molecular weight between about 1,000 and about 8,000 g/mol eq PS is preferably present at 1 to 3 wt%, based on the total weight of the radiation-curable protective varnish.

The radiation-curable protective varnish of the invention comprises from about 0.5 wt% to about 5 wt% of a (meth) acrylate group-bearing polysiloxane having a number average molecular weight between about 10,000 and about 20,000 g/mol eq PS, based on the total weight of the radiation-curable protective varnish.

Preferably the (meth)acrylate group-bearing polysiloxane having a number average molecular weight between about 10,000 and about 20,000 g/mol eq PS is selected from those having a (meth)acrylate functionality of from about 1 to about 4, preferably about 2, in particular mono(meth)acrylates, di(meth)acrylates, tri(meth)acrylates and tetra(meth) acrylates.

In one embodiment, the (meth)acrylate group-bearing polysiloxane having a number average molecular weight between about 10,000 and about 20,000 g/mol eq PS has a number average molecular weight between about 11,000 and about 18,000 g/mol eq PS, preferably between about 12,000 and about 15,000 g/mol eq PS.

In another embodiment, the (meth)acrylate group-bearing polysiloxane having a number average molecular weight between about 10,000 and about 20,000 g/mol eq PS is selected from those having a (meth)acrylate functionality of from about 1 to about 4, preferably about 2, in particular di(meth)acrylates, tri(meth)acrylates and tetra(meth)acrylates having a number average molecular weight between about 11,000 and about 18,000 g/mol eq PS, preferably between about 12,000 and about 15,000 g/mol eq PS.

In one embodiment, the (meth)acrylate group-bearing polysiloxane having a number average molecular weight between about 10,000 and about 20,000 g/mol eq PS is a polydimethylsiloxane-epoxy-acrylate.

In another embodiment, the (meth)acrylate group-bearing polysiloxane having a number average molecular weight between about 10,000 and about 20,000 g/mol eq PS is a polydimethylsiloxane-epoxy-acrylate, having a (meth) acrylate functionality of from about 1 to about 4, preferably about 2.

The (meth)acrylate group-bearing polysiloxane having a number average molecular weight between about 10,000 and about 20,000 g/mol eq PS is preferably present at 1-3 wt%, based on the total weight of the radiation-curable protective varnish.

In one embodiment, the (meth)acrylate group-bearing polysiloxane having a number average molecular weight between about 10,000 and about 20,000 g/mol eq PS is siloxanes and silicones, di-Me, 3-[2-hydroxy-3-[(1-oxo-2-propenyl)oxy]propoxy]propyl Me (CAS Nr: 136753-21-4), with number average molecular weight of 13,906 g/mol eq PS, and an acrylate functionality of about 1.96.

In one embodiment, the (meth)acrylate group-bearing polysiloxane having a number average molecular weight between about 1,000 and about 8,000 g/mol eq PS is a polyester-modified, acrylate-functionalized polydimethylsiloxane, having a number average molecular weight of 6,522 g/mol eq PS, and an acrylate functionality of about 2, preferably at 0.75 to 3.5 wt%, and the (meth)acrylate group-bearing polysiloxane having a number average molecular weight between about 10,000 and about 20,000 g/mol eq PS is siloxanes and silicones, di-Me, 3-[2-hydroxy-3-[(1-oxo-2-propenyl)oxy] propoxy]propyl Me (CAS Nr: 136753-21-4), with number average molecular weight of 13,906 g/mol eq PS, preferably at 0.75 to 3.5 wt%, and an acrylate functionality of about 1.96, the wt%'s being based on the total weight of the radiation-curable protective varnish.

The number average molecular weights ($M_n$) of the polysiloxanes and (meth)acrylate monomers and oligomers can be determined by GPC (gel permeation chromatography) according to OECD test method 118. In a specific example, a Malvern Viskotek GPCmax was used. The device is equipped with an isocratic pump, a degasser, an autosampler and a triple detector TDA 302 comprising a differential refractometer, a viscosimeter and a double-angle light scattering detector (7° and 90°). A calibration curve [log(molecular mass) vs f(retention volume)] is established using six polystyrene standards (with molecular masses ranging from 472 to 512,000 g/mol) and n-hexylbenzene being used for as the standard for the smallest molecular mass (M = 162 g/mol). Two columns Viskotek TM4008L (column length 30.0 cm, internal diameter 8.0 mm) are coupled in series. The stationary phase is made of a styrene-divinylbenzene copolymer with a particle size of 6 μm and a maximum pore size of 3000 Å. During the measurement, the temperature is fixed at 35°C. The analyzed samples contain 10 mg/mL of polysiloxane dissolved in THF, and are injected at a rate of 1 mL/min. The molecular mass of the polysiloxane is calculated from the chromatogram as a polystyrene-equivalent number average molecular weight (PS eq $M_n$) using the following formula:

$$M_n = \frac{\sum_{i=1}^{n} H_i M_i}{\sum_{i=1}^{n} H_i}$$

where $H_i$ is the level of the detector signal (differential refractometer) from the baseline for the retention volume $V_i$, $M_i$ is the molecular mass of the polymer fraction at the retention volume $V_i$ and $n$ is number of data points. Omnisec 5.12 as provided with the device can be used as a software.

To facilitate storing, stacking and grasping of security documents, in particular banknotes, the radiation-curable protective varnish of the invention may contain a matting agent, which provides a matt protective coating with a better grip. Moreover, a matt protective coating has the advantage of retaining the users' accustomed perception of security documents by the sense of touch, and causes much less reflection than a glossy protective coating, thereby, enabling machine checking and authentication of security documents with the optical sensors customarily used. The matting agent is preferably present in an amount from about 1 wt% to about 12 wt%, more preferably 2 to 5 wt%, the weight percents (wt%) being based on the total weight of the radiation-curable protective varnish.

The use of matting agents should be avoided if the radiation-curable protective varnish is intended for production of glossy protective coatings that can be useful, for example, for protecting the surface of an overt security feature present in a security document. A radiation-curable protective varnish of the invention, which is free of matting agents, provides a glossy protective coating, which is conspicuous and draws the layperson's attention to the security feature covered by the glossy lacquer, thereby aiding the inexperienced user to easily find the security feature on the security document. Such radiation-curable protective varnish can be applied directly on the surface of a security feature present on a security document. Furthermore, such matting agent-free radiation-curable protective varnish may be useful for producing glossy discontinuous protective coatings for security documents as described in the international patent application publication number WO2011120917A1 and WO2020/234211A1, which present a matt protective coating applied directly on the surface of the security document and a glossy protective coating, which partially covers the surface of the matt protective coating.

The matting agent is preferably selected from inorganic particles and resin particles. Examples of inorganic particles and resin particles include, but are not limited to thermoplastic polymer matting agents, such as thermoplastic polymer microspheres and micronized polyolefin waxes, calcium carbonate matting agents, such as core/shell microparticles comprising a calcium carbonate core and a hydroxyapatite shell, sold under the tradename Omyamatt® 100 by Omya, aluminium oxide matting agents, aluminosilicate matting agents, and amorphous silicon dioxide particles having a porous structure, such as fumed amorphous silicon dioxide particles, precipitated amorphous silicon dioxide particles and amorphous silicon dioxide particles obtained from the sol-gel process.

Preferably, the matting agent is selected from amorphous silicon dioxide particles having a porous structure including organic surface treated amorphous silicon dioxide particles. Such matting agent presents low refractive index resulting in good transmission properties.

The matting agent is preferably characterized by a $D_{50}$ value in the range of from about 1 $\mu$m to about 25 $\mu$m, preferably from 2 $\mu$m to about 15 $\mu$m, more preferably between about 3 $\mu$m and about 10 $\mu$m, as determined by laser diffraction.

The radiation-curable protective varnish may optionally contain up to 10 wt% of an organic solvent, the weight percent being based on the total weight of the radiation-curable protective varnish. Preferably, the organic solvent is present in an amount from about 1 wt% to about 7.5 wt%, more preferably from about 2 wt% to about 5 wt%, based on the total weight of the radiation-curable protective varnish. Preferably, the organic solvent is a polar organic solvent selected from alcohols, glycols, glycol ethers, glycol esters and cyclic carbonates, preferably having a boiling point higher than about 80°C, more preferably higher than about 100°C. In a preferred embodiment, the solvent is *n*-butanol.

The radiation-curable protective varnish of the invention may further contain one or more additives including without limitation antifoaming agents, defoaming agents, UV-absorbers, anti-sedimentation stabilizers, antimicrobial agents including antibacterial agents, antiviral agents, and antifungal agents, and combinations thereof.

The radiation-curable protective varnish described and claimed herein may be prepared by mixing either the cycloaliphatic epoxide, or the mixture of the cycloaliphatic epoxide and the one or more cationically curable monomers other than the cycloaliphatic epoxide, with the one or more radically-curable monomers and/or oligomers, the organic solvent when present, the one or more additives when present, the matting agent when present, the surfactants, the cationic photoinitiator and the free-radical photoinitiator. Preferably, the solid ingredients of the radiation-curable protective varnish are dispersed in the mixture of the liquid ingredients contained by said protective varnish. The surfactants, the cationic photoinitiator and the free-radical photoinitiator may be added to the mixture either during the dispersing or mixing step of all other ingredients, or at a later stage (i.e. just before the application of the radiation-curable protective varnish on a surface of a substrate of a security document and/or on a surface of one or more security features of a security document) simultaneously, or in sequence.

Preferably the radiation-curable protective varnish is a flexography printing varnish, an inkjet printing varnish, or a

screen-printing varnish, more preferably a flexography printing varnish.

In a preferred embodiment, the radiation-curable protective varnish is a flexography printing varnish. Flexography printing preferably uses a unit with a doctor blade, preferably a chambered doctor blade, an anilox roller and plate cylinder. The anilox roller advantageously has small cells whose volume and/or density determines the curable varnish application rate. The doctor blade lies against the anilox roller, and scraps off varnish surplus at the same time. The anilox roller transfers the varnish to the plate cylinder, which finally transfers the varnish to the substrate. Specific design might be achieved using a designed photopolymer plate. Plate cylinders can be made from polymeric or elastomeric materials. Polymers are mainly used as photopolymer in plates and sometimes as a seamless coating on a sleeve. Photopolymer plates are made from light-sensitive polymers that are hardened by ultraviolet (UV) light. Photopolymer plates are cut to the required size and placed in an UV light exposure unit. One side of the plate is completely exposed to UV light to harden or cure the base of the plate. The plate is then turned over, a negative of the job is mounted over the uncured side and the plate is further exposed to UV light. This hardens the plate in the image areas. The plate is then processed to remove the unhardened photopolymer from the nonimage areas, which lowers the plate surface in these nonimage areas. After processing, the plate is dried and given a post-exposure dose of UV light to cure the whole plate. Preparation of plate cylinders for flexography is described in Printing Technology, J. M. Adams and P.A. Dolin, Delmar Thomson Learning, 5th Edition, pages 359-360. To be suitable to be printed by flexography, the radiation-curable protective varnish must have a viscosity in the range of about 100 to about 500 mPas at 25°C measured using a Brookfield viscometer (model "DV-I Prime) equipped with a spindle S21 at 100 rpm.

In a further preferred embodiment according to the present invention, the radiation-curable protective varnish is an inkjet printing varnish, preferably a drop-on-demand (DOD) inkjet printing varnish. Drop-on-demand (DOD) printing is a non-contact printing process, wherein the droplets are only produced when required for printing, and generally by an ejection mechanism rather than by destabilizing a jet. Depending on the mechanism used in the printhead to produce droplets, the DOD printing is divided in piezo impulse, thermal jet and valve jet. To be suitable for DOD inkjet printing, the radiation-curable protective varnish must have low viscosity of less than about 20 mPa s at jetting temperature and a surface tension lower than about 45 N/m.

In still another embodiment according to the present invention, the radiation-curable protective varnish is a screen-printing varnish. As well known to those skilled in the art, screen-printing (also referred in the art as silkscreen-printing) is a printing technique that typically uses a screen made of woven mesh to support an ink-blocking stencil. The attached stencil forms open areas of mesh that transfer varnish as a sharp-edged image onto a substrate. A squeegee is moved across the screen with ink-blocking stencil, forcing varnish past the threads of the woven mesh in the open areas. A significant characteristic of screen-printing is that a greater thickness of the varnish can be applied on the substrate than with other printing techniques. Screen-printing is therefore also preferred when varnish deposits with the thickness having a value between about 10 to 50 $\mu$m or greater are required which cannot (easily) be achieved with other printing techniques. Generally, a screen is made of a piece of porous, finely woven fabric called mesh stretched over a frame of e.g. aluminum or wood. Currently most meshes are made of man-made materials such as synthetic or steel threads. Preferred synthetic materials are nylon or polyester threads.

In addition to screens made of a woven mesh based on synthetic or metal threads, screens have been developed out of a solid metal sheet with a grid of holes. Such screens are prepared by a process comprising of electrolytically forming a metal screen by forming in a first electrolytic bath a screen skeleton upon a matrix provided with a separating agent, stripping the formed screen skeleton from the matrix and subjecting the screen skeleton to an electrolysis in a second electrolytic bath in order to deposit metal onto said skeleton.

There are three types of screen-printing presses, namely flat-bed, cylinder and rotary screen-printing presses. Flat-bed and cylinder screen-printing presses are similar in that both use a flat screen and a three-step reciprocating process to perform the printing operation. The screen is first moved into position over the substrate, the squeegee is then pressed against the mesh and drawn over the image area, and then the screen is lifted away from the substrate to complete the process. With a flat-bed press the substrate to be printed is typically positioned on a horizontal print bed that is parallel to the screen. With a cylinder press the substrate is mounted on a cylinder. Flat-bed and cylinder screen-printing processes are discontinuous processes, and consequently limited in speed which is generally at maximum 45 m/min in web or 3’000 sheets/hour in a sheet-fed process.

Conversely, rotary screen presses are designed for continuous, high-speed printing. The screens used on rotary screen presses are for instance thin metal cylinders that are usually obtained using the electroforming method described hereabove or made of woven steel threads. The open-ended cylinders are capped at both ends and fitted into blocks at the side of the press. During printing, the varnish is pumped into one end of the cylinder so that a fresh supply is constantly maintained. The squeegee is fixed inside the rotating screen and squeegee pressure is maintained and adjusted to allow a good and constant print quality. The advantage of rotary screen presses is the speed which can reach easily 150 m/min in web or 10’000 sheets/hour in a sheet-fed process.

Screen-printing is further described for example in The Printing Ink Manual, R.H. Leach and R.J. Pierce, Springer Edition, 5th Edition, pages 58-62, in Printing Technology, J. M. Adams and P.A. Dolin, Delmar Thomson Learning, 5th

Edition, pages 293-328 and in Handbook of Print Media, H. Kipphan, Springer, pages 409-422 and pages 498-499.

The radiation-curable protective varnish of the invention may be applied by a contactless fluid micro-dispensing process, preferably selected from the group consisting of spray coating, aerosol jet printing, electrohydrodynamic printing, slot die coating and inkjet printing, more preferably by an inkjet printing process.

Spray coating is a technique involving forcing the composition through a nozzle whereby a fine aerosol is formed. A carrier gas and electrostatic charging may be involved to aid in directing the aerosol at the surface that is to be printed. Spray printing allows to print spots and lines. Suitable compositions for spray printing typically have a viscosity between about 10 mPa.s and about 1 Pa.s (25°C, 1000 $s^{-1}$). Resolution of spray coating printing lies in the millimeter range. Spray printing is described for example in F. C. Krebs, Solar Energy Materials & Solar Cells (2009), 93, page 407.

Aerosol jet printing (AJP) is compatible with a wide material range and freeform deposition, allows high resolution (in the order of about 10 micrometers) coupled with a relatively large stand-off distance (e.g. 1-5 mm), in addition to the independence of orientation. The technology involves aerosol generation using either ultrasonic or pneumatic atomization to generate an aerosol from compositions typically having a viscosity between about 1 mPa.s and about 1 Pa.s (25°C, 1000 $s^{-1}$). Aerosol jet printing is described for example in N. J. Wilkinson et al., The International Journal of Advanced Manufacturing Technology (2019) 105:4599-4619.

Electrohydrodynamic inkjet printing is a high-resolution inkjet printing technology. Electrohydrodynamic inkjet printing technology makes use of externally applied electric fields to manipulate droplet size, ejection frequency and placement on the substrate to get higher resolution than convention inkjet printing, while keeping a high production speed. The resolution of electrohydrodynamic inkjet printing is about two orders of magnitude higher than conventional inkjet printing technology; thus, it can be used for the orienting of nano- and micro-scale patterns. Electrohydrodynamic inkjet printing may be used both in drop-on-demand (DOD) or in continuous mode. Compositions for electrohydrodynamic inkjet printing typically have a viscosity between about 1 mPa.s and about 1 Pa.s (25°C, 1000 $s^{-1}$). Electrohydrodynamic inkjet printing technology is described for example P.V. Raje and N.C. Murmu, International Journal of Emerging Technology and Advanced Engineering, (2014), 4(5), pages 174-183.

Slot die-coating is a 1-dimensional coating technique. Slot-die coating allows for the coating of stripes of material which is well suited for making a multilayer coating with stripes of different materials layered on top of each other. The alignment of the pattern is produced by the coating head being translated along the direction perpendicular to the direction of the web movement. A slot die-coating head comprises a mask that defines the slots of the coating head through which the slot-die coating ink is dispersed. An example of a slot-die coating head is illustrated in F. C. Krebs, Solar Energy Materials & Solar Cells (2009), 93, page 405-406. Suitable compositions for slot die-coating typically have a viscosity between about 1 mPa.s and about 20 mPa.s (25°C, 1000 $s^{-1}$).

The radiation-curable protective varnish of the invention is preferably curable by exposure to UV light, preferably by exposure to one or more wavelengths of between about 365 nm and about 405 nm, more preferably by exposure to UV light at 365 nm and/or 385 nm and/or 395 nm, emitted by one or more UV-LED light sources. As well-known by the person skilled in the art, the radiation-curable protective varnish of the invention is also suitable for curing using medium-pressure mercury lamps.

The radiation-curable protective varnish of the invention may be cured by mercury lamps or may be cured by UV-LED lamps, or may be cured by both, such as in an arrangement wherein said protective varnish is first partially cured using UV-LED to increase the viscosity of the varnish ("LED pinning") then completely cured using a mercury lamp.

Mercury lamps have the advantage of covering a large span of emission wavelengths in the UV-A, UV-B and UV-C spectral domains. With the aim of providing environmentally friendly solutions, systems and UV mercury medium pressure lamps for curing inks with low energy (LE or HUV) have been developed. Low energy mercury medium pressure lamps have emission spectrum in UV-A and UV-B regions and have less than 5% of the UV energy in UV-C emission. Said systems and lamps produce a reduced amount of light emitted in the ozone-generating wavelengths of the spectrum that occurs with conventional medium pressure mercury lamps.

With the aim of providing solutions that are less costly, require less intervention and are more environmentally friendly, lamps and systems based on UV-LEDs have been developed for curing inks and coatings. On the contrary to medium-pressure mercury lamps, UV-LED lamps only emit radiation in the UV-A region. Moreover, current UV-LED lamps emit quasi monochromatic radiation, i.e. only emit at one wavelength, such as 365 nm, 385 nm, 395 nm or 405 nm, which requires an adaptation of the photoinitiating system, as already mentioned previously.

Another aspect according to the present invention relates to a process for coating a security document comprising a substrate and one or more security features applied on or inserted into a portion of the substrate, wherein said process comprises the following steps:

i) applying, preferably by a printing method selected from flexography printing, inkjet printing, and screen-printing, the radiation-curable protective varnish of the invention on a surface of the substrate and/or a surface of the one or more security features of the security document to form a varnish layer; and

**ii)** curing the varnish layer by exposure to UV light to form a protective coating covering at least partially the surface of

the substrate and/or the surface of the one or more security features of the security document.

As used herein, the term "substrate" includes any security document substrate into a portion of which a security feature can be inserted and/or to which a security feature can be applied. Security document substrates include without limitation, papers or other fibrous materials such as cellulose, paper-containing materials, plastics and polymers, composite materials and mixtures or combinations thereof. Typical paper, paper-like or other fibrous materials are made from a variety of fibers including without limitation abaca, cotton, linen, wood pulp, and blends thereof. As well known to those skilled in the art, cotton and cotton/linen blends are preferred for banknotes, while wood pulp is commonly used in non-banknote security documents. Typical examples of plastics and polymers include polyolefins, such as polyethylene (PE) and polypropylene (PP), polyamides, polyesters such as polyethylene terephthalate) (PET), poly(1,4-butylene terephthalate) (PBT), polyethylene 2,6-naphthoate) (PEN) and polyvinylchlorides (PVC). Typical examples of composite materials include without limitation multilayer structures or laminates of paper and at least one plastic or polymer material, such as those described hereabove. The substrate of the security document may be printed with any desired signs, including any symbols, images and patterns, and/or may include one or more security features, including luminescent security features.

A further aspect according to the present invention is directed to a security document comprising a substrate, one or more security features applied on or inserted into a portion of the substrate and a protective coating covering a surface of the substrate and/or a surface of the one or more security features of the security document, wherein the protective coating is obtained by the coating process of the invention comprising the following steps:

**i)** applying, preferably by a printing method selected from flexography printing, inkjet printing, and screen-printing, more preferably by flexography printing, the radiation-curable protective varnish of the invention on a surface of the substrate and/or a surface of the one or more security features of the security document to form a varnish layer; and
**ii)** curing the varnish layer by exposure to UV light to form a protective coating covering at least partially the surface of the substrate and/or the surface of the one or more security features of the security document.

The security document according to the present invention may comprise on one of its sides a protective coating-free region of between about 5 and about 15% of the substrate surface, wherein the percentages are based on the total surface of the security document. Preferably, said protective coating-free region is present on at least one edge or corner of the substrate. The protective coating-free region may be used for example for numbering the security document. If the security document is a banknote, the coating-free region may be additionally used for adsorbing a staining (indelible) ink used for protecting banknotes against theft and robbery as described in the international patent application publication no. WO2013127715A2.

A further aspect according to the present invention is directed to a protective coating for a security document comprising a substrate, and optionally one or more security features applied on or inserted into a portion of the substrate, wherein the protective coating is obtained from the radiation-curable protective varnish of the invention. Specifically, the above-mentioned protective coating is obtained by:

**i)** applying, preferably by a printing method selected from flexography printing, inkjet printing, and screen-printing, more preferably by flexography printing, the radiation-curable protective varnish of the invention on a surface of the substrate and/or a surface of the one or more security features of the security document to form a varnish layer; and
**ii)** curing the varnish layer by exposure to UV light to form a protective coating covering at least partially the surface of the substrate and/or the surface of the one or more security features of the security document.

## Preferred embodiments of the invention

1. a radiation-curable protective varnish comprising:

**a)** from about 50 wt% to about 85 wt% of either a cycloaliphatic epoxide, or a mixture of a cycloaliphatic epoxide and one or more cationically curable monomers other than the cycloaliphatic epoxide;
**b)** from about 3 wt% to about 15 wt%, preferably from about 6 wt% to about 10 wt%, more preferably about 7 wt% of one or more radically-curable monomers and/or oligomers, other than polysiloxanes;
**c)** from about 1 wt% to about 7 wt%, preferably from about 2 wt% to about 6 wt%, more preferably about 5.5 wt% of a cationic photoinitiator;
**d)** from about 0.5 wt% to about 3 wt%, preferably from about 0.75 wt% to about 1.5 wt%, more preferably about 1 wt% of a free-radical photoinitiator;

**e)** from about 0.5 wt% to about 5 wt% of a (meth)acrylate group-bearing polysiloxane having a number average molecular weight ($M_n$) between about 1,000 and about 8,000 g/mol eq PS; and
**f)** from about 0.5 wt% to about 5 wt% of a (meth)acrylate group-bearing polysiloxane having a number average molecular weight ($M_n$) between about 10,000 and about 20,000 g/mol eq PS;

wherein the weight percents are based on the total weight of the radiation-curable protective varnish.

2. The radiation-curable protective varnish of any one preceding embodiment, wherein the (meth)acrylate group-bearing polysiloxane having a number average molecular weight between about 1,000 and about 8,000 g/mol eq PS is selected from non-ionic surfactants comprising a silicone backbone containing randomly distributed recurring units selected from di(methyl)siloxane ($-(CH_3)_2SiO-$) and/or methyl-($C_2$-$C_{10}$-alkyl)-siloxane ($-(CH_3)(C_2$-$C_{10}$-alkyl)SiO-), wherein one or more methyl groups and/or $C_2$-$C_{10}$-alkyl groups may be independently of each other substituted by an aryl group, a polyester, and presenting one or more terminal and/or pendant (meth)acrylate groups, wherein the silicone backbone may be connected directly or *via* a spacer to the one or more terminal and/or pendant (meth) acrylate groups.

3. The radiation-curable protective varnish of any one preceding embodiment, wherein the (meth)acrylate group-bearing polysiloxane having a number average molecular weight between about 10,000 and about 20,000 g/mol eq PS is selected from non-ionic surfactants comprising a silicone backbone containing randomly distributed recurring units selected from di(methyl)siloxane ($-(CH_3)_2SiO-$) and/or methyl-($C_2$-$C_{10}$-alkyl)-siloxane ($-(CH_3)(C_2$-$C_{10}$-alkyl) SiO-), wherein one or more methyl groups and/or $C_2$-$C_{10}$-alkyl groups may be independently of each other substituted by an aryl group, a polyester, and presenting one or more terminal and/or pendant (meth)acrylate groups, wherein the silicone backbone may be connected directly or *via* a spacer to the one or more terminal and/or pendant (meth) acrylate groups.

4. The radiation-curable protective varnish of any one preceding embodiment, wherein the (meth)acrylate group-bearing polysiloxane having a number average molecular weight between about 1,000 and about 8,000 g/mol eq PS is an acrylate-bearing polysiloxane.

5. The radiation-curable protective varnish of any one preceding embodiment, wherein the (meth)acrylate group-bearing polysiloxane having a number average molecular weight between about 1,000 and about 8,000 g/mol eq PS is selected from those having a (meth)acrylate functionality of from about 1 to about 4, preferably about 2, in particular mono(meth)acrylates, di(meth)acrylates, tri(meth)acrylates and tetra(meth)acrylates.

6. The radiation-curable protective varnish of any one preceding embodiment, wherein the (meth)acrylate group-bearing polysiloxane having a number average molecular weight between about 1,000 and about 8,000 g/mol eq PS is selected from those having a (meth)acrylate functionality of about 2.

7. The radiation-curable protective varnish of any one preceding embodiment, wherein the (meth)acrylate group-bearing polysiloxane having a number average molecular weight between about 1,000 and about 8,000 g/mol eq PS has a number average molecular weight between about 2,000 and about 7,500 g/mol, preferably between about 3,000 and about 7,000 g/mol.

8. The radiation-curable protective varnish of any one preceding embodiment, wherein the (meth)acrylate group-bearing polysiloxane having a number average molecular weight between about 1,000 and about 8,000 g/mol eq PS is selected from those having a (meth)acrylate functionality of from about 1 to about 4, preferably about 2, in particular mono(meth)acrylates, di(meth)acrylates, tri(meth)acrylates and tetra(meth)acrylates, having a number average molecular weight between about 2,000 and about 7,500 g/mol eq PS, preferably between about 3,000 and about 7,000 g/mol eq PS.

9. The radiation-curable protective varnish of any one preceding embodiment, wherein the (meth)acrylate group-bearing polysiloxane having a number average molecular weight between about 1,000 and about 8,000 g/mol eq PS is selected from those having a (meth)acrylate functionality of about 2.

10. The radiation-curable protective varnish of any one preceding embodiment, wherein the (meth)acrylate group-bearing polysiloxane having a number average molecular weight between about 1,000 and about 8,000 g/mol eq PS has a number average molecular weight of about 6,522 g/mol eq PS.

11. The radiation-curable protective varnish of any one preceding embodiment, wherein the (meth)acrylate group-bearing polysiloxane having a number average molecular weight between about 1,000 and about 8,000 g/mol eq PS is a polyester-modified, acrylate-functionalized polydimethylsiloxane, having a number average molecular weight of about 6,522 g/mol eq PS, and an acrylate functionality of about 2.

12. The radiation-curable protective varnish of any one preceding embodiment, wherein the (meth)acrylate group-bearing polysiloxane having a number average molecular weight between about 1,000 and about 8,000 g/mol eq PS is present at about 1 to about 3 wt%, based on the total weight of the radiation-curable protective varnish.

13. The radiation-curable protective varnish of any one preceding embodiment, wherein the (meth)acrylate group-bearing polysiloxane having a number average molecular weight between about 10,000 and about 20,000 g/mol eq PS is an acrylate-bearing polysiloxane.

14. The radiation-curable protective varnish of any one preceding embodiment, wherein the (meth)acrylate group-bearing polysiloxane having a number average molecular weight between about 10,000 and about 20,000 g/mol eq PS has a number average molecular weight between about 11,000 and about 18,000 g/mol eq PS, preferably between about 12,000 and about 15,000 g/mol eq PS.

15. The radiation-curable protective varnish of any one preceding embodiment, wherein the (meth)acrylate group-bearing polysiloxane having a number average molecular weight between about 10,000 and about 20,000 g/mol eq PS is selected from those having a (meth)acrylate functionality of from about 1 to about 4, preferably about 2, in particular mono(meth)acrylates, di(meth)acrylates, tri(meth)acrylates and tetra(meth)acrylates.

16. The radiation-curable protective varnish of any one preceding embodiment, wherein the (meth)acrylate group-bearing polysiloxane having a number average molecular weight between about 10,000 and about 20,000 g/mol eq PS has a number average molecular weight of about 13,906 g/mol eq PS.

17. The radiation-curable protective varnish of any one preceding embodiment, wherein the (meth)acrylate group-bearing polysiloxane having a number average molecular weight between 10,000 and 20,000 g/m is di-Me, 3-[2-hydroxy-3-[(1-oxo-2-propenyl)oxy]propoxy]propyl Me (CAS Nr: 136753-21-4), with number average molecular weight of 13,906 g/mol eq PS, and an acrylate functionality of about 1.96.

18. The radiation-curable protective varnish of any one preceding embodiment, wherein the (meth)acrylate group-bearing polysiloxane having a number average molecular weight between about 10,000 and about 20,000 g/mol eq PS is present at a range between 1 wt% and 3 wt%.

19. The radiation-curable protective varnish of any one preceding embodiment, wherein the (meth)acrylate group-bearing polysiloxane having a number average molecular weight between about 1,000 and about 8,000 g/mol eq PS is selected from those having a (meth)acrylate functionality of about 2.

20. The radiation-curable protective varnish of any one preceding embodiment, wherein the number average molecular weights of the polysiloxanes are measured by GPC (gel permeation chromatography) using OECD test method 118.

## EXAMPLES

The invention is now described in more detail with reference to the following, non-limiting examples. The examples and comparative examples below provide more details for the preparation of the hybrid (cat/rad) radiation-curable protective varnishes according to the invention.

**Table 1A. Surfactants used in Examples and comparative Examples**

| Commercial name (supplier) | Chemical name (CAS number) |
|---|---|
| Fluorolink® E10H (Solvay) | Tetrafluoroethylene, oxidized, oligomers, reduced, methyl esters, reduced, reaction products with ethylene oxide (CAS Nr: 162492-15-1)<br>Also known as polyperfluoroethoxymethoxy difluoroethyl PEG ether<br>Molecular weight (supplier): 1,500 g/mol |

(continued)

| Table 1A. Surfactants used in Examples and comparative Examples | |
|---|---|
| **Commercial name (supplier)** | **Chemical name (CAS number)** |
| BYK-UV 3570 (BYK) | 70 wt% polyester-modified, multi-acrylic functional polydimethylsiloxane in 30 wt% propoxylated neopentylglycol diacrylate (CAS Nr: 84170-74-1)<br>Number average molecular weight ($M_n$): 6,522 g/mol eq PS (GPC according to OECD test method 118)<br>Acrylate functionality = 2 |
| Silmer® OH ACR C-50 (Siltech) | a high molecular weight multi-functional polysiloxane acrylate pre-polymer<br>Siloxanes and Silicones, di-Me, 3-[2-hydroxy-3-[(1-oxo-2-propenyl)oxy]propoxy] propyl Me (CAS Nr: 136753-21-4)<br>number average molecular weight ($M_n$): 13,906 g/mol eq PS (GPC according to OECD test method 118)<br>Acrylate functionality = 1.96 |
| Silmer® EPC-C50 (Siltech) | a high molecular weight polysiloxane pre-polymer with cycloaliphatic epoxide groups<br>Siloxanes and Silicones, di-Me, Me 2-(7-oxabicyclo[4.1.0]hept-3-yl)ethyl (CAS Nr: 308073-08-7)<br>number average molecular weight ($M_n$): 11,977 g/mol eq PS (GPC according to OECD test method 118) |

The number average molecular weights ($M_n$) of the polysiloxanes were determined by GPC (gel permeation chromatography) according to OECD test method 118. A Malvern Viskotek GPCmax was used. The device was equipped with an isocratic pump, a degasser, an autosampler and a triple detector TDA 302 comprising a differential refractometer, a viscosimeter and a double-angle light scattering detector (7° and 90°). A calibration curve [log(molecular mass) vs f(retention volume)] was established using six polystyrene standards (with molecular masses ranging from 472 to 512,000 g/mol) and *n*-hexylbenzene being used for as the standard for the smallest molecular mass (M = 162 g/mol). The equation of the calibration curve was as follows:

$$y = -0.3218x + 10.25 \ (R^2 = 0.9977)$$

with y = log(molecular mass) and x = retention volume in ml.

Two columns Viskotek TM4008L (column length 30.0 cm, internal diameter 8.0 mm) were coupled in series. The stationary phase was a styrene-divinylbenzene copolymer with a particle size of 6 μm and a maximum pore size of 3000 Å. During the measurement, the temperature was fixed at 35°C. The analyzed samples contained 10 mg/mL of polysiloxane dissolved in THF, and were injected at a rate of 1 mL/min. The molecular mass of the polysiloxane was calculated from the chromatogram as a polystyrene-equivalent number average molecular weight (PS eq $M_n$) using the following formula:

$$M_n = \frac{\sum_{i=1}^{n} H_i M_i}{\sum_{i=1}^{n} H_i}$$

where $H_i$ is the level of the detector signal (differential refractometer) from the baseline for the retention volume $V_i$, $M_i$ is the molecular mass of the polymer fraction at the retention volume $V_i$ and $n$ is number of data points. Omnisec 5.12, as provided with the device, was used as software.

| Table 1B. Other ingredients | | |
|---|---|---|
| **Ingredient** | **Commercial name (supplier)** | **Chemical name (CAS number)** |
| Cycloaliphatic epoxide | Uvacure 1500 (Allnex) | 7-oxabicyclo[4.1.0]hept-3-ylmethyl 7-oxabicyclo[4.1.0]heptane-3-carboxylate (CAS Nr: 2386-87-0) |

(continued)

| Table 1B. Other ingredients | | |
|---|---|---|
| **Ingredient** | **Commercial name (supplier)** | **Chemical name (CAS number)** |
| Oxetane | Curalite™Ox (Perstorp) | 3-ethyloxetane-3-methanol (CAS Nr: 3047-32-3) |
| Radical oligomer | Ebecryl® 2959 (Allnex) | Acrylated epoxy resin<br>23 wt% glycerol propoxylated triacrylate (CAS Nr: 52408-84-1) + 77 wt% bisphenol-A epoxy acrylate oligomer (CAS Nr: 55818-57-0) |
| Photoinitiator | SpeedCure 992 (Arkema) | 50 wt% propylene carbonate (CAS Nr: 108-32-7) + 50 wt% mixture of Sulfonium, diphenyl[(phenylthio)phenyl]-, hexafluorophosphate(1-) (1:1) (CAS Nr: 68156-13-8) and Sulfonium, S,S'-(thiodi-4,1-phenylene)bis[S,S-diphenyl-, hexafluorophosphate(1-) (1:2) (CAS Nr: 74227-35-3) |
| Photoinitiator | Omnirad® 2959 (IGM Resins) | 2-hydroxy-4'-hydroxyethoxy-2-methylpropiophenone (CAS Nr: 106797-53-9) |
| Antifoam agent | TEGO® AIREX 900 (Evonik) | Siloxanes and Silicones, di-Me, reaction products with silica (CAS Nr: 67762-90-7) |
| Matting agent | ACEMATT® TS 100 (untreated thermal silica, Evonik) | Silica, amorphous, fumed, crystal-free (CAS Nr: 112945-52-5) |
| Solvent | n-butanol (BRENNTAG) | Butan-1-ol (CAS Nr: 71-36-3) |

**A. Preparation of hybrid (cat/rad) radiation-curable protective varnishes of the invention (E1-E6) and comparative varnishes (C1-C4)**

100 g each of the hybrid (cat/rad) radiation-curable protective varnishes of the invention, E1-E6, and the comparative varnishes C1-C4 were prepared by first pre-mixing the three first ingredients (cycloaliphatic epoxide, oxetane and radical oligomer) in the quantities listed in Table 2 using a Dispermat (model CV-3) (5 min at 1,500 rpm), then adding and dispersing the matting agent during about 25 minutes at 1,500 rpm and finally adding the other ingredients and the surfactants and mixing further for about 15 minutes at 1,500 rpm. The viscosity of the hybrid (cat/rad) varnishes was measured at 25°C on a Brookfield viscometer (model "DV-I Prime", spindle S21 at 100 rpm) and reported in Table 2. The varnishes are particularly well suited to industrial printing using flexographic equipment.

| Table 2. Composition of the hybrid (cat/rad) radiation-curable protective varnishes E1-E6 and comparative varnishes C1-C4 | | | | | | | | | | | |
|---|---|---|---|---|---|---|---|---|---|---|---|
| **Ingredient** | **Commercial name** | **C1** | **C2** | **C3** | **C4** | **E1** | **E2** | **E3** | **E4** | **E5** | **E6** |
| | | Amount [wt%] | | | | | | | | | |
| Cycloaliphatic epoxide | Uvacure® 1500 | 63.2 | 61.7 | 61.7 | 60.7 | 59.7 | 61.7 | 62.7 | 63.7 | 61.7 | 61.7 |
| Oxetane | Curalite®Ox | 14.0 | | | | | | | | | |
| Radical oligomer | Ebecryl® 2959 | 7.0 | | | | | | | | | |

(continued)

Table 2. Composition of the hybrid (cat/rad) radiation-curable protective varnishes E1-E6 and comparative varnishes C1-C4

| Ingredient | Commercial name | C1 | C2 | C3 | C4 | E1 | E2 | E3 | E4 | E5 | E6 |
|---|---|---|---|---|---|---|---|---|---|---|---|
| | | Amount [wt%] | | | | | | | | | |
| Surfactant/ polysiloxane | BYK-UV 3570 $M_n$ = 6,522 g/mol eq PS | | 4.0 | | | 3.0 | 2.0 | 1.5 | 1.0 | 1.0 | 3.0 |
| | Silmer OH ACR C-50 $M_n$ = 13,906 g/mol eq PS | | | 4.0 | | 3.0 | 2.0 | 1.5 | 1.0 | 3.0 | 1.0 |
| | Fluorolink® E10H | 2.5 | | | | | | | | | |
| | Silmer® EPC-C50 | | | | 5.0 | | | | | | |
| Antifoam agent | TEGO® AIREX 900 | 0.3 | | | | | | | | | |
| Matting agent | ACEMATT® TS 100 | 3.5 | | | | | | | | | |
| Solvent | n-butanol | 3.0 | | | | | | | | | |
| Cationic photointiator | SpeedCure® 992 | 5.5 | | | | | | | | | |
| Radical photoinitiator | Omnirad® 2959 | 1.0 | | | | | | | | | |
| Total | | 100 | | | | | | | | | |
| Viscosity [mPas] @ 25°C | | 225 | 257 | 240 | 247 | 282 | 257 | 247 | 236 | 250 | 259 |
| Coat weight [g/m$^2$] | | 2.3 | 2.3 | 2.2 | 2.3 | 2.2 | 2.2 | 2.3 | 2.3 | 2.3 | 2.2 |

## B. Preparation of protective layers

The protective varnishes E1-E6 according to the invention and the comparative varnishes C1-C4 were independently applied on a piece of fiduciary cotton substrate (BNP paper from Louisenthal, 100 g/m$^2$) to form wet protective layers having a thickness of 2-3 $\mu$m by a laboratory pilot flexo printing unit (N. Schläfli Maschinen) with an anilox (160l/m, 8 cm$^3$/m$^2$) and a rubber printing cylinder of 65-75 Shores. UV-curing the wet protective layers to form radiation cured layers was performed with an on-line UV dryer (system VPC-20 supplied by GEWj comprising a standard mercury UV lamp (ref 14957) at a power of 100% (180 W/cm) and a conveyor speed of 50 m/min. The temperature was 28°C and the relative humidity was 30%. The conditions used for curing the coated substrates are similar to the curing conditions expected in an industrial environment.

## C. Assessment of performance

The protective layers obtained as described above were independently tested for two performance criteria:

- Blue ink test: pieces of each substrate carrying the radiation-cured protective layers obtained from the varnishes E1-E6 according to the invention and the comparative varnishes C1-C4 and having the dimensions 7.2 cm x 13.2 cm were independently soaked for 30 seconds in a solution of Pelikan ink (royal blue 4001 diluted at 40 wt% in deionized water) at a temperature of 23°C. The blue ink was washed away with deionized water then placed between two glass plates in an oven at 60°C for about 12 hours. The ink remaining on the substrate was visually inspected. The performance was evaluated as follows and reported in Table 3:

| Visual observation | Assessment | Protective effect |
|---|---|---|
| Blue spots cover a very large surface | 1 | Poor |
| Blue spots cover a large surface | 2 | Insufficient |
| Blue spots cover a limited surface | 3 | Adequate |
| Blue spots cover a small surface | 4 | Good |
| Blue spots are few and far between | 5 | Excellent |

- rubbing test: pieces of substrate carrying the radiation cured protective layers obtained from the varnishes E2, E4 and C2 and having the dimensions 7.2 x 6.0 cm were independently pasted using double surface adhesive tape (3M/Scotch® Double Sided) on a glass plate. The glass plate carrying the tested sample was placed in an automatic rubbing machine (Zehntner ZAA 2600) equipped with a rubber pad (dimensions 5.9cm x 3.9cm) on which a piece of blank substrate (BNP paper from Louisenthal, 100 $g/m^2$) had been attached. The piece of blank substrate was in direct contact with the tested protective layer. A steel weight of 0.5 kg was placed on the rubber pad (such that the total weight was about 0.65 kg) and said rubber pad underwent a back-and-forth movement in the length of the tested sample at a rate of 42 cycles/minute for 800 cycles. The distance of the movement is such that at each movement, the rubber pad stops 5 mm from the edge of the tested sample. After rubbing, the tested samples were independently submitted to the blue ink test (as described above) and a visual comparison of the performance between the pristine protective layer (0 cycles of rubbing) and the worn one (800 cycles of rubbing) was carried out. The performance was reported using the scale shown below:

| Visual observation | Assessment | Conclusion |
|---|---|---|
| The surface of the tested sample is covered in blue, essentially as lines along the direction of rubbing (i.e. in the length direction of the tested samples) after 800 cycles | poor | The protective effect is lost when the protective layer wears out |
| The number of blue spots is significantly higher after 800 cycles | adequate | The protective effect is reduced but remains adequate when the protective layer wears out |
| There is almost no difference visible after 800 cycles | optimal | The protective effect stays more or less the same when the protective layer wears out |

The results of the blue ink test (protective varnishes E1-E6 and C1-C4) and of the rubbing test (protective varnishes E2, E4 and C2) are reported in Table 3 (below).

**Table 3. Performance of the hybrid (cat/rad) radiation-curable protective varnishes E1-E6 and comparative varnishes C1-C4**

| Example | Surfactant | Blue ink test | Rubbing test | Final assessment |
|---|---|---|---|---|
| C1 | Fluorolink® E10H (2.5 wt%) | 3 | adequate | pass |
| C2 | BYK-UV 3570 (4 wt%) | 4.5 | poor | fail |
| C3 | Silmer® OH ACR C-50 (4 wt%) | 2 | n.d.[1] | fail |
| C4 | Silmer® EPC-C50 (5 wt%) | 2 | n.d. | fail |
| E1 | BYK-UV 3570 (3 wt%) + Silmer® OH ACR C-50 (3 wt%) | 4.5 | adequate | pass |
| E2 | BYK-UV 3570 (2 wt%) + Silmer® OH ACR C-50 (2 wt%) | 4 | adequate | pass |
| E3 | BYK-UV 3570 (1.5 wt%) + Silmer® OH ACR C-50 (1.5 wt%) | 4 | adequate | pass |
| E4 | BYK-UV 3570 (1 wt%) + Silmer® OH ACR C-50 (1 wt%) | 3.5 | adequate | pass |
| E5 | BYK-UV 3570 (1 wt%) + Silmer® OH ACR C-50 (3 wt%) | 3.5 | adequate | pass |

(continued)

| Table 3. Performance of the hybrid (cat/rad) radiation-curable protective varnishes E1-E6 and comparative varnishes C1-C4 | | | | |
|---|---|---|---|---|
| **Example** | **Surfactant** | **Blue ink test** | **Rubbing test** | **Final assessment** |
| E6 | BYK-UV 3570 (3 wt%) + Silmer OH ACR C-50 (1 wt%) | 4 | adequate | pass |

The comparative protective varnish C1 had good protective effect (as tested by the blue ink test) but it comprises a perfluorpolyether surfactant which is increasingly disfavored due to alleged HSE issues. The comparative protective varnish C2, which comprises an acrylated polysiloxane having a number average molecular weight of 6,522 g/mol eq PS (i.e. between about 1,000 and about 8,000 g/mol eq PS), had excellent protective effect (as tested by the blue ink test) just after application and curing but the varnish performed poorly in the rubbing test, and would therefore not last long in actual circulation. The protective varnish C3, which comprises an acrylated polysiloxane having a number average molecular weight of 13,906 g/mol eq PS (i.e. between about 10,000 and about 20,000 g/mol eq PS), showed poor protective effect (as tested by the blue ink test) after application and curing. The protective varnish C4, which comprises an epoxy-functionalized polysiloxane having a number average molecular weight of 11,977 g/mol eq PS also showed poor protective effect (as tested by the blue ink test) after application and curing.

The protective varnishes E1-E6 according to the invention (i.e. comprising between 0.5 wt% and 5 wt% of an acrylated polysiloxane having a number average molecular weight between about 1,000 and about 8,000 g/mol eq PS and between 0.5 wt% and 5 wt% of an acrylated polysiloxane having a number average molecular weight between about 10,000 and about 20,000 g/mol eq PS) exhibited adequate to very good protective effect after application and curing. Furthermore, the result of the rubbing test indicates that, even for the lowest total amount of surfactants (E4), the protective effect remained adequate upon wearing out of the protective layer in actual circulation.

## Claims

**1.** A radiation-curable protective varnish comprising:

**a)** from about 50 wt% to about 85 wt% of either a cycloaliphatic epoxide, or a mixture of a cycloaliphatic epoxide and one or more cationically curable monomers other than the cycloaliphatic epoxide;
**b)** from about 3 wt% to about 15 wt%, preferably from about 6 wt% to about 10 wt%, more preferably about 7 wt% of one or more radically-curable monomers and/or oligomers, other than polysiloxanes;
**c)** from about 1 wt% to about 7 wt%, preferably from about 2 wt% to about 6 wt%, more preferably about 5.5 wt% of a cationic photoinitiator;
**d)** from about 0.5 wt% to about 3 wt%, preferably from about 0.75 wt% to about 1.5 wt%, more preferably about 1 wt% of a free-radical photoinitiator;
**e)** from about 0.5 wt% to about 5 wt% of a (meth)acrylate group-bearing polysiloxane having a number average molecular weight between about 1,000 and about 8,000 g/mol eq PS; and
**f)** from about 0.5 wt% to about 5 wt% of a (meth)acrylate group-bearing polysiloxane having a number average molecular weight between about 10,000 and about 20,000 g/mol eq PS; wherein the weight percents are based on the total weight of the radiation-curable protective varnish.

**2.** The radiation-curable protective varnish of claim 1, wherein the (meth)acrylate group-bearing polysiloxane having a number average molecular weight between about 1,000 and about 8,000 g/mol eq PS is selected from non-ionic surfactants comprising a silicone backbone containing randomly distributed recurring units selected from di(methyl) siloxane ($-(CH_3)_2SiO-$) and/or methyl-($C_2$-$C_{10}$-alkyl)-siloxane ($-(CH_3)(C_2\text{-}C_{10}\text{-alkyl})SiO-$), wherein one or more methyl groups and/or $C_2$-$C_{10}$-alkyl groups may be independently of each other substituted by an aryl group, a polyester, and presenting one or more terminal and/or pendant (meth)acrylate groups, wherein the silicone backbone may be connected directly or *via* a spacer to the one or more terminal and/or pendant (meth)acrylate groups.

**3.** The radiation-curable protective varnish of claim 1 or 2, wherein the (meth)acrylate group-bearing polysiloxane having a number average molecular weight between about 10,000 and about 20,000 g/mol eq PS is selected from non-ionic surfactants comprising a silicone backbone containing randomly distributed recurring units selected from di(methyl)siloxane ($-(CH_3)_2SiO-$) and/or methyl-($C_2$-$C_{10}$-alkyl)-siloxane ($-(CH_3)(C_2\text{-}C_{10}\text{-alkyl})SiO-$), wherein one or

more methyl groups and/or $C_2$-$C_{10}$-alkyl groups may be independently of each other substituted by an aryl group, a polyester, and presenting one or more terminal and/or pendant (meth)acrylate groups, wherein the silicone backbone may be connected directly or *via* a spacer to the one or more terminal and/or pendant (meth)acrylate groups.

**4.** The radiation-curable protective varnish of claim 1, 2 or 3, wherein the (meth)acrylate group-bearing polysiloxane having a number average molecular weight between about 1,000 and about 8,000 g/mol eq PS is an acrylate-bearing polysiloxane.

**5.** The radiation-curable protective varnish of any one preceding claim, wherein the (meth)acrylate group-bearing polysiloxane having a number average molecular weight between about 1,000 and about 8,000 g/mol eq PS has an acrylate functionality of from about 1 to about 4, preferably about 2.

**6.** The radiation-curable protective varnish of any one preceding claim, wherein the (meth)acrylate group-bearing polysiloxane having a number average molecular weight between about 10,000 and about 20,000 g/mol eq PS is an acrylate-bearing polysiloxane.

**7.** The radiation-curable protective varnish of any one preceding claim, wherein the (meth)acrylate group-bearing polysiloxane having a number average molecular weight between about 1,000 and about 8,000 g/mol eq PS has a molecular weight between about 2,000 and about 7,500 g/mol eq PS, preferably between about 3,000 and about 7,000 g/mol eq PS.

**8.** The radiation-curable protective varnish of any one preceding claim, wherein the (meth)acrylate group-bearing polysiloxane having a number average molecular weight between about 10,000 and about 20,000 g/mol eq PS has a molecular weight between about 11,000 and about 18,000 g/mol eq PS, preferably between about 12,000 and about 15,000 g/mol eq PS.

**9.** The radiation-curable protective varnish of any one preceding claim, wherein the (meth)acrylate group-bearing polysiloxane having a number average molecular weight between about 10,000 and about 20,000 g/mol eq PS has an acrylate functionality of from about 1 to about 4, preferably about 2.

**10.** The radiation-curable protective varnish of any one preceding claim, wherein the cycloaliphatic epoxide is a compound of general formula (III):

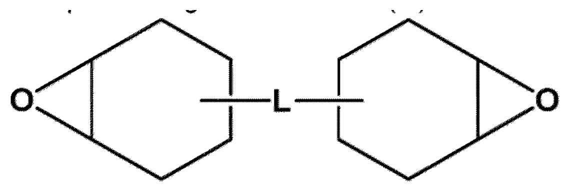

**(III)**

wherein **-L-** represents a straight- or branched-chain alkylene group comprising from one to eighteen carbon atoms or a divalent alicyclic hydrocarbon group, or cycloalkydene group, such as 1,2-cyclopentylene group, 1,3-cyclopentylene group, cyclopentylidene group, 1,2-cyclohexylene group, 1,3-cyclohexylene group, 1,4-cyclohexylene group, and cyclohexylidene group, or a divalent group comprising one or more oxygen-containing linkage groups, wherein said oxygen-containing linkage groups are selected from the group consisting of -C(=O)-, -OC(=O)O-, -C(=O)O-, and -O-.

**11.** The radiation-curable protective varnish of any one preceding claim, wherein the one or more cationically curable monomers other than the cycloaliphatic epoxide are selected from the group consisting of: vinyl ethers, propenyl ethers, cyclic ethers other than a cycloaliphatic epoxide, including epoxides other than a cycloaliphatic epoxide, oxetanes, and tetrahydrofuranes, lactones, cyclic thioethers, vinyl thioethers, propenyl thioethers, hydroxyl-containing compounds, and mixtures thereof, preferably from the group consisting of: vinyl ethers, cyclic ethers other than a cycloaliphatic epoxide, particularly oxetanes, and mixtures thereof.

**12.** The radiation-curable protective varnish of any one preceding claim, wherein the one or more radically-curable monomers and/or oligomers is selected from the group consisting of mono(meth)acrylates, di(meth)acrylates,

tri(meth)acrylates, tetra(meth)acrylates and mixtures thereof, other than polysiloxanes, preferably from the group consisting of di(meth)acrylates, tri(meth)acrylates, and mixtures thereof, other than polysiloxanes.

**13.** The radiation-curable protective varnish of any one preceding claim, wherein the cationic photoinitiator is a diaryl iodonium salt or a sulphonium salt.

**14.** The radiation-curable protective varnish of any one preceding claim, wherein the free-radical photoinitiator is selected from the group consisting of hydroxyketones (e.g. alpha-hydroxyketones), alkoxyketones (e.g. alpha-alkoxyketones), acetophenones, benzophenones, ketosulfones, benzyl ketals, benzoin ethers, phosphine oxides, phenylglyoxylates, thioxanthones and mixtures thereof, more preferably selected form the group consisting of alpha-hydroxyketones.

**13.** The radiation-curable protective varnish of any one preceding claim, wherein the number average molecular weights of the polysiloxanes are measured by GPC (gel permeation chromatography) using OECD test method 118.

**15.** A process for coating a security document comprising a substrate and optionally one or more security features applied on or inserted into a portion of the substrate, wherein said process comprises the following steps:

**i)** applying, preferably by a printing method selected from flexography printing, inkjet printing, and screen-printing, the radiation-curable protective varnish as recited in any one of claims 1 to 13 on a surface of the substrate and/or a surface of the one or more security features of the security document to form an un-cured varnish layer; and
**ii)** curing the un-cured varnish layer by exposure to UV light to form a protective coating covering at least partially the surface of the substrate and/or the surface of the one or more security features of the security document.

European Patent Office

# EUROPEAN SEARCH REPORT

Application Number
EP 24 19 4740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2014/067715 A1 (SICPA HOLDING SA [CH]) 8 May 2014 (2014-05-08) * claims; examples * | 1-15 | INV. C09D11/101 B41M3/14 |
| A | WO 2022/207658 A1 (SICPA HOLDING SA [CH]) 6 October 2022 (2022-10-06) * claims; examples * | 1-15 | |
| A | US 2024/018378 A1 (PITTET HERVÉ [CH] ET AL) 18 January 2024 (2024-01-18) * claims; examples * | 1-15 | |
| A | US 12 054 619 B2 (SICPA HOLDING SA [CH]) 6 August 2024 (2024-08-06) * claims; examples * | 1-15 | |
| A | US 2011/033664 A1 (DICKER MARK ROBERT [GB] ET AL) 10 February 2011 (2011-02-10) * claims; examples * | 1-15 | |
| | | | TECHNICAL FIELDS SEARCHED (IPC) |
| | | | C09D B41M |

The present search report has been drawn up for all claims

1

| Place of search | Date of completion of the search | Examiner |
|---|---|---|
| Munich | 13 January 2025 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 19 4740

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2025

| Patent document cited in search report | Publication date | Patent family member(s) | Publication date |
|---|---|---|---|
| WO 2014067715 A1 | 08-05-2014 | AR 093100 A1 | 20-05-2015 |
| | | AU 2013339747 A1 | 02-04-2015 |
| | | BR 112015006556 A2 | 20-03-2018 |
| | | CA 2884872 A1 | 08-05-2014 |
| | | CL 2015001091 A1 | 07-08-2015 |
| | | CN 104870582 A | 26-08-2015 |
| | | CO 7400863 A2 | 30-09-2015 |
| | | DK 2912125 T3 | 13-02-2017 |
| | | EA 201590832 A1 | 31-08-2015 |
| | | EP 2912125 A1 | 02-09-2015 |
| | | ES 2614246 T3 | 30-05-2017 |
| | | HK 1213589 A1 | 08-07-2016 |
| | | HU E030494 T2 | 29-05-2017 |
| | | IL 238055 A | 29-05-2017 |
| | | JP 6183927 B2 | 23-08-2017 |
| | | JP 2015533904 A | 26-11-2015 |
| | | KR 20150073978 A | 01-07-2015 |
| | | MX 366092 B | 27-06-2019 |
| | | MY 182933 A | 05-02-2021 |
| | | PH 12015500656 A1 | 11-05-2015 |
| | | PL 2912125 T3 | 28-04-2017 |
| | | PT 2912125 T | 03-01-2017 |
| | | SG 11201501959W A | 28-05-2015 |
| | | TW 201425401 A | 01-07-2014 |
| | | UA 113457 C2 | 25-01-2017 |
| | | US 2015259565 A1 | 17-09-2015 |
| | | WO 2014067715 A1 | 08-05-2014 |
| WO 2022207658 A1 | 06-10-2022 | AR 125598 A1 | 02-08-2023 |
| | | AU 2022250709 A1 | 09-11-2023 |
| | | BR 112023019690 A2 | 31-10-2023 |
| | | CA 3213794 A1 | 06-10-2022 |
| | | CN 117098818 A | 21-11-2023 |
| | | EP 4314172 A1 | 07-02-2024 |
| | | JP 2024514475 A | 02-04-2024 |
| | | KR 20230162983 A | 29-11-2023 |
| | | TW 202248263 A | 16-12-2022 |
| | | US 2024209223 A1 | 27-06-2024 |
| | | WO 2022207658 A1 | 06-10-2022 |
| US 2024018378 A1 | 18-01-2024 | AR 124029 A1 | 08-02-2023 |
| | | AU 2021377383 A1 | 29-06-2023 |
| | | CA 3200711 A1 | 19-05-2022 |
| | | CN 116438265 A | 14-07-2023 |
| | | DK 4244297 T3 | 11-11-2024 |
| | | EP 4244297 A1 | 20-09-2023 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 19 4740

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2025

| Patent document cited in search report | Publication date | Patent family member(s) | Publication date |
|---|---|---|---|
| | | JP 2023547687 A | 13-11-2023 |
| | | KR 20230098859 A | 04-07-2023 |
| | | PT 4244297 T | 22-11-2024 |
| | | SA 523440638 B1 | 04-06-2024 |
| | | TW 202225339 A | 01-07-2022 |
| | | US 2024018378 A1 | 18-01-2024 |
| | | WO 2022101225 A1 | 19-05-2022 |
| US 12054619 B2 | 06-08-2024 | AR 124028 A1 | 08-02-2023 |
| | | AU 2021379959 A1 | 29-06-2023 |
| | | CA 3200712 A1 | 19-05-2022 |
| | | CN 116507686 A | 28-07-2023 |
| | | DK 4244298 T3 | 11-11-2024 |
| | | EP 4244298 A1 | 20-09-2023 |
| | | JP 2023547688 A | 13-11-2023 |
| | | KR 20230098858 A | 04-07-2023 |
| | | PT 4244298 T | 27-11-2024 |
| | | SA 523440637 B1 | 04-06-2024 |
| | | TW 202227564 A | 16-07-2022 |
| | | US 2023407116 A1 | 21-12-2023 |
| | | WO 2022101224 A1 | 19-05-2022 |
| US 2011033664 A1 | 10-02-2011 | EP 2212113 A1 | 04-08-2010 |
| | | JP 2011507006 A | 03-03-2011 |
| | | US 2011033664 A1 | 10-02-2011 |
| | | WO 2009062867 A1 | 22-05-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022258704 A1
- WO 2014067715 A
- WO 2011120917 A1
- WO 2020234211 A1
- WO 2013127715 A2


### Non-patent literature cited in the description


- *CHEMICAL ABSTRACTS*, 2386-87-0
- *CHEMICAL ABSTRACTS*, 64630-63-3
- *CHEMICAL ABSTRACTS*, 82428-30-6
- *CHEMICAL ABSTRACTS*, 86273-46-3
- *CHEMICAL ABSTRACTS*, 6921-35-3
- *CHEMICAL ABSTRACTS*, 3047-32-3
- *CHEMICAL ABSTRACTS*, 298695-60-0
- *CHEMICAL ABSTRACTS*, 3897-65-2
- *CHEMICAL ABSTRACTS*, 18934-00-4
- *CHEMICAL ABSTRACTS*, 142627-97-2
- *CHEMICAL ABSTRACTS*, 74267-45-1
- *CHEMICAL ABSTRACTS*, 358365-48-7
- *CHEMICAL ABSTRACTS*, 37674-57-0
- *CHEMICAL ABSTRACTS*, 52408-84-1
- *CHEMICAL ABSTRACTS*, 55818-57-0
- *CHEMICAL ABSTRACTS*, 14874-70-5
- *CHEMICAL ABSTRACTS*, 47855-94-7
- *CHEMICAL ABSTRACTS*, 16919-18-9
- *CHEMICAL ABSTRACTS*, 16973-45-8
- *CHEMICAL ABSTRACTS*, 17111-95-4
- *CHEMICAL ABSTRACTS*, 37181-39-8
- *CHEMICAL ABSTRACTS*, 16722-51-3
- *CHEMICAL ABSTRACTS*, 45187-15-3
- *CHEMICAL ABSTRACTS*, 14477-72-6
- *CHEMICAL ABSTRACTS*, 45167-47-3
- *CHEMICAL ABSTRACTS*, 130447-45-9
- *CHEMICAL ABSTRACTS*, 71786-69-1
- *CHEMICAL ABSTRACTS*, 61267-44-5
- *CHEMICAL ABSTRACTS*, 178233-71-1
- *CHEMICAL ABSTRACTS*, 46449-56-3
- *CHEMICAL ABSTRACTS*, 344562-79-4
- *CHEMICAL ABSTRACTS*, 78337-07-2
- *CHEMICAL ABSTRACTS*, 66482-57-3
- *CHEMICAL ABSTRACTS*, 758629-51-5
- *CHEMICAL ABSTRACTS*, 157552-66-4
- *CHEMICAL ABSTRACTS*, 76310-29-7
- *CHEMICAL ABSTRACTS*, 94564-97-3
- *CHEMICAL ABSTRACTS*, 249300-48-9
- *CHEMICAL ABSTRACTS*, 137141-44-7
- *CHEMICAL ABSTRACTS*, 167997-83-3
- *CHEMICAL ABSTRACTS*, 167997-61-7
- *CHEMICAL ABSTRACTS*, 124053-08-3
- *CHEMICAL ABSTRACTS*, 167997-63-9
- *CHEMICAL ABSTRACTS*, 137141-41-4
- *CHEMICAL ABSTRACTS*, 144095-91-0
- *CHEMICAL ABSTRACTS*, 202068-75-5
- *CHEMICAL ABSTRACTS*, 167997-67-3
- *CHEMICAL ABSTRACTS*, 167997-77-5
- *CHEMICAL ABSTRACTS*, 167997-81-1
- *CHEMICAL ABSTRACTS*, 167997-71-9
- *CHEMICAL ABSTRACTS*, 167997-69-5
- *CHEMICAL ABSTRACTS*, 167997-65-1
- *CHEMICAL ABSTRACTS*, 167997-73-1
- *CHEMICAL ABSTRACTS*, 167997-79-7
- *CHEMICAL ABSTRACTS*, 167997-75-3
- *CHEMICAL ABSTRACTS*, 121239-74-5
- *CHEMICAL ABSTRACTS*, 139301-14-7
- *CHEMICAL ABSTRACTS*, 789443-26-1
- *CHEMICAL ABSTRACTS*, 91290-88-9
- *CHEMICAL ABSTRACTS*, 46734-23-0
- *CHEMICAL ABSTRACTS*, 1146127-10-7
- *CHEMICAL ABSTRACTS*, 71786-70-4
- *CHEMICAL ABSTRACTS*, 68609-97-2
- *CHEMICAL ABSTRACTS*, 60565-88-0
- *CHEMICAL ABSTRACTS*, 108-32-7
- *CHEMICAL ABSTRACTS*, 344562-80-7
- *CHEMICAL ABSTRACTS*, 61358-25-6
- *CHEMICAL ABSTRACTS*, 178233-72-2
- *CHEMICAL ABSTRACTS*, 68156-13-8
- *CHEMICAL ABSTRACTS*, 106797-53-9
- *CHEMICAL ABSTRACTS*, 75980-60-8
- *CHEMICAL ABSTRACTS*, 7473-98-5
- *CHEMICAL ABSTRACTS*, 162881-26-7
- *CHEMICAL ABSTRACTS*, 84434-11-7
- *CHEMICAL ABSTRACTS*, 947-19-3
- *CHEMICAL ABSTRACTS*, 163702-01-0
- *CHEMICAL ABSTRACTS*, 24650-42-8
- *CHEMICAL ABSTRACTS*, 136753-21-4

- **J. M. ADAMS** ; **P.A. DOLIN**. Printing Technology. Delmar Thomson Learning, 359-360
- **R.H. LEACH** ; **R.J. PIERCE**. The Printing Ink Manual. Springer, 58-62
- **J. M. ADAMS** ; **P.A. DOLIN**. Printing Technology. Delmar Thomson Learning, 293-328
- **H. KIPPHAN**. Handbook of Print Media. Springer, 409-422, 498-499
- **F. C. KREBS**. *Solar Energy Materials & Solar Cells*, 2009, vol. 93, 407
- **N. J. WILKINSON et al.** *The International Journal of Advanced Manufacturing Technology*, 2019, vol. 105, 4599-4619
- **P.V. RAJE** ; **N.C. MURMU**. *International Journal of Emerging Technology and Advanced Engineering*, 2014, vol. 4 (5), 174-183
- **F. C. KREBS**. *Solar Energy Materials & Solar Cells*, 2009, vol. 93, 405-406
- *CHEMICAL ABSTRACTS*, 162492-15-1
- *CHEMICAL ABSTRACTS*, 84170-74-1
- *CHEMICAL ABSTRACTS*, 308073-08-7
- *CHEMICAL ABSTRACTS*, 74227-35-3
- *CHEMICAL ABSTRACTS*, 67762-90-7
- *CHEMICAL ABSTRACTS*, 112945-52-5
- *CHEMICAL ABSTRACTS*, 71-36-3